(19) Europäisches Patentamt / European Patent Office / Office européen des brevets

(11) **EP 4 296 628 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(21) Anmeldenummer: **23180947.6**

(22) Anmeldetag: **22.06.2023**

(51) Internationale Patentklassifikation (IPC):
***G01F 1/58*** *(2006.01)*

(52) Gemeinsame Patentklassifikation (CPC):
**G01F 1/586; G01F 1/584; G01F 1/588**

(54) **MAGNETISCH-INDUKTIVES DURCHFLUSSMESSGERÄT**

MAGNETIC INDUCTIVE FLOW METER

DÉBITMÈTRE MAGNÉTO-INDUCTIF

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.06.2022 DE 102022115650**

(43) Veröffentlichungstag der Anmeldung:
**27.12.2023 Patentblatt 2023/52**

(73) Patentinhaber: **Krohne AG**
**4019 Basel (CH)**

(72) Erfinder:
• **Hogendoorn, Cornelis Johannes**
**4211 BG Spijk (NL)**

• **den Haan, Arthur**
**2311 VH Leiden (NL)**

(74) Vertreter: **Gesthuysen Patentanwälte Partnerschaftsgesellschaft mbB**
**Huyssenallee 68**
**45128 Essen (DE)**

(56) Entgegenhaltungen:
**EP-B1- 0 234 754 DE-A1- 102014 113 404**
**GB-A- 1 095 915 GB-A- 2 292 613**
**US-A- 4 726 236 US-A- 4 727 754**
**US-A1- 2014 020 477 US-A1- 2017 131 131**

**Beschreibung**

Die Erfindung betrifft ein magnetisch-induktives Durchflussmessgerät, mit einem Messrohr zum Führen eines elektrisch leitfähigen Mediums, mit einer Magnetfeldeinrichtung aufweisend eine Mehrzahl von Spulen zur Erzeugung eines das Messrohr zumindest teilweise senkrecht zur Strömungsrichtung des Mediums durchsetzenden Magnetfeldes und mit einer Magnetfeldführungsvorrichtung zur bereichsweisen Führung des Magnetfeldes außerhalb des Messrohres, mit Messelektroden zum Abgreifen wenigstens einer in dem Medium induzierten Messspannung, und mit einer Steuer- und Auswertevorrichtung zur Erzeugung des Magnetfeldes durch Bestromung wenigstens einer der Spulen und zur Auswertung der Messspannung.

Magnetisch-induktive Durchflussmessgeräte sind in einer Vielzahl aus dem Stand der Technik, wie zum Beispiel das Dokument US 2014/020477 A1, bekannt. Funktionsnotwendig weisen magnetisch-induktive Durchflussmessgeräte wenigstens ein Messrohr zum Führen eines elektrisch leitfähigen Mediums, dessen Durchfluss bestimmt werden soll, sowie eine Magnetfeldeinrichtung aufweisend eine Mehrzahl von Spulen zur Erzeugung eines das Messrohr zumindest teilweise senkrecht zur Strömungsrichtung des Mediums durchsetzenden Magnetfeldes auf. Zudem weisen aus dem Stand der Technik bekannte magnetisch-induktive Durchflussmessgeräte ebenfalls eine Magnetfeldführungsvorrichtung zur bereichsweisen Führung des Magnetfeldes außerhalb des Messrohres sowie Messelektroden zum Abgreifen einer in dem Medium induzierten Messspannung auf.

Das der magnetisch-induktiven Durchflussmessung zugrunde liegende Messprinzip beruht auf der Trennung bewegter Ladungen in einem externen Magnetfeld. Aufgrund der Ladungstrennung wird eine Messspannung in dem Medium induziert, die mithilfe von Messelektroden abgegriffen und ausgewertet werden kann. Die Auswertung der Messspannung resultiert in einer Information über die - über den Querschnitt des Messrohrs gemittelten - Strömungsgeschwindigkeit des Mediums und damit in einer Information über den Volumendurchfluss durch das Messrohr.

Zwar hat sich das Prinzip der magnetisch-induktiven Durchflussmessung im Stand der Technik als ein zuverlässiges Messprinzip bewährt, jedoch ist bekannt, dass magnetisch-induktive Durchflussmessgeräte empfindlich auf das Strömungsprofil des durch das Messrohr fließenden Mediums bzw. auf eine Veränderung des Strömungsprofils reagieren, bzw. dass die Messgenauigkeit, mit der ein magnetisch-induktives Durchflussmessgerät Messungen durchführen kann, abhängig ist von Störungen und Asymmetrien im Strömungsprofil.

Zur Beschreibung der feldtheoretischen Zusammenhänge zwischen punktuell abgegriffenen Messspannungen, der magnetischen Feldverteilung im relevanten Volumen des Messrohrs, der Geschwindigkeitsverteilung des Mediums (Strömungsprofil) und der sich einstellenden induzierten elektrischen Feldverteilung sind systematische Überlegungen von Shercliff (und auch anderen) angestellt worden, aus denen der Begriff der sogenannten Gewichtsfunktion (weight-function) entstanden ist. Zur physikalischen Beschreibung der Vorgänge in einem magnetisch-induktiven Durchflussmessgerät wird danach die Elektrodenspannung berechnet durch ein Volumenintegral über den Innenraum des magnetisch-induktiven Durchflussmessgeräts, Integrand ist das Skalarprodukt aus der besagten Gewichtsfunktion und dem Geschwindigkeitsfeld der Strömung. Die ortsabhängige Gewichtsfunktion beschreibt also, inwieweit verschiedene Strömungselemente im Volumen des magnetisch-induktiven Durchflussmessgeräts zu der Messspannung beitragen. Je ortsveränderlicher die Gewichtsfunktion ist, desto empfindlicher ist die Durchflussmessung gegenüber einer Änderung des Strömungsprofils. Die Beschreibung der Zusammenhänge wird schnell aufwendig und lässt sich nur für idealisierte Annahmen hinsichtlich der Messrohrgeometrien, der Anordnung von Messelektroden und der magnetischen Feldverteilung geschlossen lösen. Der Ansatz der Gewichtsfunktion macht jedenfalls deutlich, dass über den Strömungsquerschnitt bzw. das Strömungsvolumen verteilte Geschwindigkeitskomponenten unterschiedlich hohe Beiträge zu der induzierten Messspannung leisten, sodass unterschiedliche Geschwindigkeitsprofile zu unterschiedlichen Messspannungen führen können bei gleichem gemittelten Volumendurchfluss.

Magnetisch-induktive Durchflussmessgeräte sind oftmals in Prozessanlagen verbaut, bei denen das Medium in einem Rohrsystem geführt wird. Hier können beispielsweise verschiedene Arten von Rohrsystemen, wie beispielsweise T-Stücke oder gekrümmte Rohre oder sich verändernde Querschnitte von Rohrsegmenten Einfluss auf das Strömungsprofil im magnetisch-induktiven Durchflussmessgerät und damit auf die Genauigkeit der Durchflussmessung haben. Im Stand der Technik wird deshalb darauf geachtet, dass das Strömungsprofil im Durchflussmessgerät möglichst ungestört und symmetrisch ist, was definiert lange Ein- und Auslaufstrecken erfordert, den Einsatz von Strömungsgleichrichtern usw.

Der Erfindung liegt demnach die Aufgabe zugrunde, ein magnetisch-induktives Durchflussmessgerät bereitzustellen, das eine reduzierte Sensibilität auf das Strömungsprofil, insbesondere auf Änderungen des Strömungsprofils des zu vermessenden Mediums aufweist.

Die Aufgabe ist erfindungsgemäß durch das magnetisch-induktive Durchflussmessgerät gemäß Patentanspruch 1 gelöst, nämlich dadurch, dass die Magnetfeldführungsvorrichtung geschlossen in Umfangsrichtung um das Messrohr erstreckt ist, dass die Spulen über den Umfang der Magnetfeldführungsvorrichtung verteilt angeordnet sind und die Magnetfeldführungsvorrichtung im Bereich der Spulen als Spulenkern wirkt, sodass die Spulen mit ihren Spulenlängsachsen ebenfalls in Umfangsrichtung zum Messrohr angeordnet sind und dass wenigstens drei Spulen und wenigstens drei Messelektroden vorgesehen sind und wobei jede der Messelektroden in radialer Richtung von der Mitte des Messrohrs aus gesehen zwischen zwei Spulen angeordnet ist.

Mit der konstruktiven Ausgestaltung des magnetisch-induktiven Durchflussmessgeräts gehen verschiedene Vorteile einher. Da die Spulen mit ihren Spulenlängsachsen in Umfangsrichtung zum Messrohr angeordnet sind, wird durch die Position der Spulen der Eintrittsbereich des Magnetfeldes in das Messrohr konstruktiv nicht definiert. Dies steht im Gegensatz zu den üblichen Konstruktionen, bei denen die Spulen mit ihrer Längsachse meist radial zum Messrohr - und nicht in Umfangsrichtung zum Messrohr - orientiert sind, weshalb in diesen Fällen die Positionen der Spulen konstruktiv den Eintrittspunkt des von ihnen erzeugten Magnetfeldes in das Messrohr definieren. Die Längsachse einer Spule wird hier also als die Richtung verstanden, in der die Spule bei Bestromung ein Magnetfeld erzeugt. Durch die Anordnung der Spulen über den Umfang der Magnetfeldführungsvorrichtung kann allein durch die gezielte Bestromung der Spulen bestimmt werden, wo das durch die Spulen erzeugte Magnetfeld in das Messrohr ein- und austritt, sodass durch gezielte Bestromung der Spulen durch die Steuer-und Auswertevorrichtung das Magnetfeld in seiner Richtung grundsätzlich veränderlich ist. Damit ist keine einfache Umpolung des Magnetfeldes gemeint, also eine Drehung des Magnetfeldes um 180°, sondern eine Richtungsänderung des Magnetfeldes jenseits der einfachen Antiparallelität. Die beschriebene Anordnung der Spulen um die in Umfangsrichtung des Messrohrs erstreckte Magnetfeldführungsvorrichtung ermöglicht zudem besonders platzsparende Konstruktionen, da kein zusätzlicher Platz in Richtung auf das Messrohr, also in radialer Richtung auf das Messrohr, vorzusehen ist, wie dies im Stand der Technik üblich ist.

Wenn es heißt, dass die Spulen mit ihren Spulenlängsachsen in Umfangsrichtung zum Messrohr angeordnet sind, dann kann es sich sowohl um gerade Spulen handeln, deren gerade Mittellinie also praktisch tangential zur Magnetfeldführungsvorrichtung verläuft, es kann sich aber auch um bogenförmige Spulen handeln, die einem möglichen bogenförmigen Verlauf der Magnetfeldführungsvorrichtung folgen, deren Mittellinie also ebenfalls gebogen ist und der Magnetfeldführungsvorrichtung in ihrem gebogenen Verlauf folgt.

Durch mindestens drei Spulen ist sichergestellt, dass die beschriebene Richtungsänderung des Magnetfeldes - und nicht nur eine einfache Richtungsumkehr - realisierbar ist.

Durch die Verwendung von wenigstens drei Messelektroden, die zwischen zwei Spulen angeordnet sind, ist konstruktiv sichergestellt, dass mehrere Messpfade realisiert werden können, deren Verlauf schwerpunktmäßig ebenfalls unterschiedliche Richtungen im Querschnitt des Messrohrs haben - und eben nicht nur eine 180°-Richtungsumkehr darstellen.

Das beschriebene magnetisch-induktive Durchflussmessgerät ermöglicht es damit konstruktiv, das Medium im Messrohr mit verschieden orientierten Magnetfeldern zu beaufschlagen und verschiedene Messspannungen von verschieden orientierten Messpfaden zu erheben, sodass eine erheblich bessere Mittelung auch über asymmetrische Strömungsprofile erzielt werden kann, wodurch die Empfindlichkeit des magnetisch-induktiven Durchflussmessgeräts gegen veränderliche Strömungsprofile erheblich vermindert wird.

Da jede der Messelektroden in radialer Richtung von der Mitte des Messrohrs aus gesehen jeweils zwischen zwei Spulen angeordnet ist, behindern sich platzmäßig eine elektrische Kontaktierung der Messelektroden und über den Umfang der Magnetfeldführungsvorrichtung verteilte Spulen nicht. Wenn es heißt, dass jede der Messelektroden in radialer Richtung von der Mitte des Messrohrs aus gesehen zwischen zwei Spulen angeordnet ist, bedeutet das selbst verständlich nicht, dass zwischen zwei Spulen eine Messelektrode angeordnet sein muss, es bedeutet lediglich, dass die vorhandenen Messelektroden jedenfalls zwischen zwei Spulen angeordnet sind, also von der Mitte des Messrohrs aus gesehen nicht in einer Flucht liegen mit einer der Spulen, die über den Umfang der Magnetfeldführungsvorrichtung verteilt angeordnet sind.

Eine vorteilhafte Ausgestaltung des magnetisch-induktiven Durchflussmessgerätes zeichnet sich dadurch aus, dass die Magnetfeldführungsvorrichtung einen bogenförmig gekrümmten Ring bildet. Besonders bevorzugt ist der Ring zumindest bereichsweise kreis- oder ellipsenförmig geformt. In einer anderen Variante bildet die Magnetfeldführungsvorrichtung einen polygonalen Ring. Der polygonale Ring bildet weiter bevorzugt ein sechseckiges oder achteckiges Polygon. Insbesondere weist das Polygon vorzugsweise abwechselnd lange und kurze Schenkel auf. In einer besonders bevorzugten Variante sind die Spulen auf den langen Schenkeln angeordnet.

Eine weitere vorteilhafte Ausgestaltung des magnetisch-induktiven Durchflussmessgerätes zeichnet sich dadurch aus, dass die Steuer- und Auswertevorrichtung zumindest einen Teil der Spulen in wenigstens einem ersten Betriebsmodus so bestromt, dass das erzeugte Magnetfeld im Bereich des Messrohres in einer ersten Betriebsrichtung ausgerichtet ist, und dass die Steuer-und Auswertevorrichtung zumindest einen Teil der Spulen in wenigstens einem zweiten Betriebsmodus so bestromt, dass das erzeugte Magnetfeld im Bereich des Messrohres in einer von der ersten Betriebsrichtung verschiedenen zweiten Betriebsrichtung ausgerichtet ist. Auch hier ist in einer "anderen Richtung" so zu verstehen, dass nicht der triviale Fall der Antiparallelität gemeint ist, sondern die erzeugten Magnetfelder gegeneinander geneigt sind in einem von 0° und 180° verschiedenen Winkel. Zusätzlich kann auch lediglich eine Magnetfeldumkehr realisiert sein, dies ist nicht ausgeschlossen, jedenfalls muss zusätzlich auch eine Änderung der Richtung in dem hier beschriebenen Sinne umgesetzt werden.

Die erfindungsgemäße Ausgestaltung ermöglicht es aufgrund der Bestromung zumindest eines Teils der Spulen, Magnetfelder in wenigstens zwei verschiedenen Betriebsrichtungen zu erzeugen. Pro Betriebsrichtung kann das Magnetfeld zwei Orientierungen aufweisen, nämlich eine erste Orientierung und eine entgegengesetzte, nämlich um 180° zur ersten Orientierung gedrehte zweite Orientierung. Die verschiedenen Betriebsrichtungen können auf unterschiedliche Art und Weise erzeugt werden, beispielsweise durch Bestromung unterschiedlicher Teilmengen der Spulen, wobei die Teilmengen keine gemeinsamen Spulen aufweisen; in anderen Ausführungsbeispielen können die Teilmengen aber auch zu einem gewissen Teil gemeinsamen Spulen aufweisen. Es können aber auch die gleichen Spulen bestromt werden, beispielsweise in unterschiedlicher Richtung und/oder Stärke.

Eine weitere vorteilhafte Ausgestaltung des magnetisch-induktiven Durchflussmessgerätes zeichnet sich dadurch aus, dass die Steuer- und Auswertevorrichtung zur Erzeugung des Magnetfeldes zumindest in der ersten Betriebsrichtung und der zweiten Betriebsrichtung jeweils eine Mehrzahl der Spulen bestromt.

Bei einer bevorzugten Ausgestaltung des magnetisch-induktiven Durchflussmessgeräts realisiert die Steuer- und Auswertevorrichtung eine Änderung der Bestromung der Spulen möglichst sprungförmig, wodurch sich beispielsweise schnell und auch in beliebiger Abfolge Übergänge zwischen verschiedenen Betriebsmodi realisieren lassen. Zur Realisierung solcher sprung- oder rechteckförmigen Stromverläufe muss zeitweilig mit relativ großen Spannungen gearbeitet werden, da für die Änderung des Stromes in Spulen bekanntlich die wirksame Strom-Spannungsfläche entscheidend ist. Bei einer alternativen Ausgestaltung sorgt die Steuer- und Auswertevorrichtung dafür, dass eine Änderung der Bestromung der Spulen sinusförmig realisiert wird, vorteilhaft ist insbesondere, wenn kontinuierlich sinusförmige Stromverläufe realisiert werden. Die Besonderheit ist hier, dass insbesondere bei kontinuierlich sinusförmigem Stromverlauf keine Spannungsspitzen entstehen, dafür ist der Bestromungszustand der beteiligten Spulen natürlich zeitlich festgelegt, sodass auch die realisierbaren Betriebsmodi in ihrer Ausgestaltung eingeschränkt sind.

Vorteilhaft bestromt die Steuer- und Auswertevorrichtung die Spulen so, dass der insgesamt realisierte Magnetkreis, insbesondere die Magnetfeldeinrichtung und die Magnetfeldführungsvorrichtung, in einem linearen Bereich arbeitet, insbesondere wobei der Bereich magnetischer Sättigung vermieden wird. Unter dieser Voraussetzung kann das Messsystem insgesamt als linear arbeitend betrachtet werden, sodass ohne weiteres beispielsweise von der linearen Superposition physikalischer Wirkungen ausgegangen werden kann.

Eine weitere vorteilhafte Ausgestaltung des magnetisch-induktiven Durchflussmessgerätes zeichnet sich dadurch aus, dass die Messelektroden in radialer Richtung von der Mitte des Messrohrs aus gesehen so zwischen zwei Spulen angeordnet sind, dass wenigstens ein erstes Paar der Messelektroden eine erste Messstrecke mit einer ersten Messstreckenrichtung bildet. Hierbei sind die erste Messstreckenrichtung und die erste Betriebsrichtung des Magnetfeldes gegeneinander geneigt, vorzugsweise sind sie mehr als 45° zueinander geneigt, ganz bevorzugt sind sie 90° zueinander geneigt. Des Weiteren zeichnet sich die beschriebene vorteilhafte Ausgestaltung dadurch aus, dass wenigstens ein zweites Paar der Messelektroden eine zweite Messstrecke mit einer zweiten Messstreckenrichtung bildet, wobei auch die zweite Messstreckenrichtung und die zweite Betriebsrichtung des Magnetfeldes gegeneinander geneigt sind, vorzugsweise mehr als 45° zueinander geneigt sind, ganz bevorzugt 90° zueinander geneigt sind. Je weiter die Messstreckenrichtung gegenüber der Betriebsrichtung des Magnetfeldes geneigt ist, desto wirksamer ist die Ladungstrennung in Messstreckenrichtung und desto besser ist damit die induzierte elektrische Messspannung messtechnisch erfassbar.

Allen Ausführungsbeispielen ist gemeinsam, dass die verschiedenen erfassten Messspannungen von der Steuer- und Auswertevorrichtung genutzt werden, um daraus einen Volumenstrom durch das Messrohr zu bestimmen. Die Vielfalt an Betriebsrichtungen des Magnetfeldes und die Vielfalt der verschieden orientierten Messspannungen ermöglicht es, eine von dem Strömungsprofil deutlich unabhängige Durchflussinformation zu erhalten.

Eine weitere vorteilhafte Ausgestaltung des magnetisch-induktiven Durchflussmessgerätes zeichnet sich dadurch aus, dass die Steuer- und Auswertevorrichtung zur Ermittlung eines verbesserten Durchflussmesswertes in einer Messsequenz wenigstens einmal den ersten Betriebsmodus durchführt und im ersten Betriebsmodus mit dem ersten Paar der Messelektroden eine erste Messspannung und/oder einen ersten Durchflussmesswert ermittelt, und wenigstens einmal den zweiten Betriebsmodus durchführt und im zweiten Betriebsmodus mit dem zweiten Paar der Messelektroden eine zweite Messspannung und/oder einen zweiten Durchflussmesswert ermittelt und aus der ersten Messspannung und der zweiten Messspannung und/oder aus dem ersten Durchflussmesswert und dem zweiten Durchflussmesswert den verbesserten Durchflussmesswert ermittelt. Besonders bevorzugt wird der verbesserte Durchflussmesswert von der Steuer- und Auswertevorrichtung durch Mittelwertbildung aus der ersten Messspannung und der zweiten Messspannung und/oder durch Mittelwertbildung aus dem ersten Durchflussmesswert und dem zweiten Durchflussmesswert gebildet.

Eine weitere vorteilhafte Ausgestaltung des magnetisch-induktiven Durchflussmessgerätes zeichnet sich dadurch aus, dass die Steuer- und Auswertevorrichtung in der Messsequenz den ersten Betriebsmodus mindestens zweimal durchführt, sodass das Magnetfeld in der einen Orientierung der ersten Betriebsrichtung des Magnetfeldes und in der anderen Orientierung der ersten Betriebsrichtung des Magnetfeldes erzeugt wird (es handelt sich also um entgegengesetzte Orientierungen), und entsprechende Sub-Messspannungen/Sub-Durchflussmesswerte bei jeder Orientierung der ersten Betriebsrichtung des Magnetfeldes mit dem ersten Paar der Messelektroden aufgenommen werden und aus den Sub-Messspannungen/Sub-Durchflussmesswerten der erste Durchflussmesswert berechnet wird, und dass die Steuer- und Auswertevorrichtung in der Messsequenz den zweiten Betriebsmodus mindestens zweimal durchführt, sodass das Magnetfeld in der einen Orientierung der zweiten Betriebsrichtung des Magnetfeldes und in der anderen Orientierung der zweiten Betriebsrichtung des Magnetfeldes erzeugt wird (auch hier handelt es sich also um entgegengesetzte Orientierungen) und entsprechende Sub-Messspannungen/Sub-Durchflussmesswerte bei jeder Orientierung der zweiten Betriebsrichtung des Magnetfeldes mit dem zweiten Paar der Messelektroden aufgenommen werden und aus den Sub-Messspannungen/Sub-Durchflussmesswerten der zweite Durchflussmesswert berechnet wird. Es handelt sich hier um Maßnahmen, um elektrochemische Potenziale an den Messelektroden zu eliminieren, die sich nicht mit der Orientierung des Magnetfeldes ändern.

Eine weitere vorteilhafte Ausgestaltung des magnetisch-induktiven Durchflussmessgerätes zeichnet sich dadurch aus, dass die Steuer- und Auswerteinheit die Messsequenz zumindest zeitweise so ausführt, dass zunächst nacheinander das Magnetfeld in den beiden Orientierungen der ersten Betriebsrichtung oder der zweiten Betriebsrichtung und dann nacheinander das Magnetfeld in den beiden Orientierungen der zweiten Betriebsrichtung oder der ersten Betriebsrichtung erzeugt wird, insbesondere wobei die Orientierungen der Betriebsrichtungen auch mehrfach abwechselnd nacheinander angesteuert werden.

Eine weitere vorteilhafte Ausgestaltung des magnetisch-induktiven Durchflussmessgerätes zeichnet sich dadurch aus, dass die Steuer- und Auswerteinheit die Messsequenz zumindest zeitweise so ausführt, dass die Orientierungen wenigstens zweier Betriebsrichtungen des Magnetfeldes nacheinander so angesteuert werden, dass in axialer Richtung des Messrohres gesehen ein schrittweise rotierendes Magnetfeld resultiert. Je nach konkreter Ausgestaltung der Spulenanordnung kann ein Vorteil dieser Betriebsweise darin liegen, dass beim Wechsel der Betriebsrichtung zuvor bestromte Spulen in ihrer Anregung einfach abklingen können, während andere Spulen von einem unbestromten Zustand in einen bestromten Zustand überführt werden müssen, sodass der Zeitraum zum erreichen eines stationären Bestromungszustandes schneller erreicht wird, als wenn zuvor bestromte Spulen entgegengesetzt bestromt werden müssen.

Eine bevorzugte Ausgestaltung des magnetisch-induktiven Durchflussmessgerätes zeichnet sich dadurch aus, dass die Steuer- und Auswerteinheit zumindest einen Teil der Spulen in wenigstens einem Zwischen-Betriebsmodus so bestromt, dass das erzeugte Magnetfeld im Bereich des Messrohres in einer Zwischen-Betriebsrichtung ausgerichtet ist, wobei die Zwischen-Betriebsrichtung von der ersten Betriebsrichtung und der zweiten Betriebsrichtung und gegebenenfalls weiteren Betriebsrichtungen verschieden ausgerichtet ist, insbesondere wobei zur Erzeugung des Magnetfeldes in der Zwischen-Betriebsrichtung weniger Spulen bestromt werden als zur Erzeugung des Magnetfeldes in den Betriebsrichtungen bestromt werden. Die Maßnahme der Erzeugung von Zwischen-Betriebsrichtungen trägt der Idee Rechnung, das Medium im Messrohr unter mehreren Betriebsrichtungen magnetisch anzuregen, um eine möglichst gemittelte und vom Strömungsprofil unabhängige Volumenstrominformation ableiten zu können.

Eine weitere vorteilhafte Ausgestaltung des magnetisch-induktiven Durchflussmessgerätes zeichnet sich dadurch aus, dass die Steuer- und Auswerteinheit zumindest einen Teil der Spulen in wenigstens einem Zwischen-Betriebsmodus mit unterschiedlich hohen Strömen bestromt, sodass das erzeugte Magnetfeld im Bereich des Messrohres in einer Zwischen-Betriebsrichtung ausgerichtet ist, wobei die Zwischen-Betriebsrichtung von der ersten Betriebsrichtung und der zweiten Betriebsrichtung und gegebenenfalls weiteren Betriebsrichtungen verschieden ausgerichtet ist. Diese Maßnahme macht von der konstruktiven Besonderheit des magnetisch-induktiven Durchflussmessgeräts Gebrauch, dass die Spulen mit ihrer Längsachse (= Richtung des durch die Spulen erzeugten Magnetfeldes) in Umfangsrichtung des Messrohres angeordnet sind, ohne dass konstruktiv Eintrittsorte des Magnetfeldes in den Innenraum des Messrohrs festgelegt sind (beispielsweise durch sonst übliche konstruktive Ausgestaltung von Polschuhen), sich der Eintrittsort des Magnetfeldes aus der Magnetfeldführungsvorrichtung in den Innenraum des Messrohres bestimmt durch die Bestromung der Spulen. Es ist dadurch überhaupt erst möglich, durch Wahl unterschiedlich hoher Ströme für die Bestromung der Spulen, die Richtung des Magnetfeldes im Messrohr zu beeinflussen und zu bestimmen.

In einer bevorzugten Variante werden zur Erzeugung des Magnetfeldes in der Zwischen-Betriebsrichtung weniger Spulen bestromt werden als zur Erzeugung des Magnetfeldes in den Betriebsrichtungen bestromt werden.

Eine weitere vorteilhafte Ausgestaltung des magnetisch-induktiven Durchflussmessgerät zeichnet sich dadurch aus, dass die Steuer- und Auswertevorrichtung zur Ermittlung eines verbesserten Durchflussmesswertes in einer Messsequenz neben den Messspannungen/Durchflussmesswerten aus dem wenigsten ersten Betriebsmodus und dem wenigsten zweiten Betriebsmodus mit einem Paar von Messelektroden im Zwischen-Betriebsmodus wenigstens eine Zwischen-Messspannung/einen Zwischen-Durchflussmesswert ermittelt und aus der ersten Messspannung/dem ersten Durchflussmesswert, der zweiten Messspannung/dem zweiten Durchflussmesswert und der Zwischen-Messspannung/dem Zwischen-Durchflussmesswert den verbesserten Durchflussmesswert ermittelt. Gleichwertig mit der Nutzung von Durchflussmesswerten ist erkennbar die Nutzung der von den Paaren von Messelektroden aufgenommenen (Zwischen-)Messspannungen.

Insbesondere wird der verbesserte Durchflussmesswert durch Mittelwertbildung aus der ersten Messspannung/dem ersten Durchflussmesswert, der zweiten Messspannung/dem zweiten Durchflussmesswert und der Zwischen-Messspannung/dem Zwischen-Durchflussmesswert gebildet.

Eine weitere vorteilhafte Ausgestaltung des magnetisch-induktiven Durchflussmessgerätes zeichnet sich dadurch aus, dass genau drei Messelektroden vorgesehen sind. Die drei Messelektroden sind von der Mitte des Messrohrs aus gesehen unter Winkeln zwischen 90° und 150° zueinander angeordnet. Hierbei ist es bevorzugt, jedoch nicht notwendig, dass die Elektroden symmetrisch unter einem Winkel von 120° zueinander angeordnet sind. Zudem sind genau drei Spulen in einem Winkel zwischen 90° und 150° zueinander angeordnet. Hierbei ist es ebenfalls bevorzugt, jedoch nicht notwendig, dass die drei Spulen symmetrisch in einem Winkel von 120° zueinander angeordnet sind und in einem Winkel von 40° bis 80°, insbesondere in einem Winkel von 60°, zu den Messelektroden angeordnet sind. Zur Erzeugung des Magnetfeldes in drei Betriebsrichtungen werden für jede Betriebsrichtung jeweils zwei der Spulen von der Steuer- und Auswertevorrichtung bestromt.

Eine weitere vorteilhafte Ausgestaltung des magnetisch-induktiven Durchflussmessgerätes zeichnet sich dadurch aus, dass genau drei Messelektroden vorgesehen sind und dass die drei Messelektroden von der Mitte des Messrohrs aus gesehen unter Winkeln zwischen 90° und 150° zueinander angeordnet sind. Besonders bevorzugt sind die genau drei Messelektroden symmetrisch unter einem Winkel von 120° zueinander angeordnet. Ferner sind sechs Spulen vorgesehen. Jeweils zwei der sechs Spulen haben von der Mitte des Messrohrs aus gesehen, eine Messelektrode zwischen sich und zwei Messelektroden haben jeweils zwei Spulen zwischen sich. Bevorzugt sind jeweils drei der sechs Spulen jeweils unter einem Winkel von 120° zueinander angeordnet und jeweils die beiden einer Messelektrode benachbart angeordneten Spulen sind unter dem gleichen Winkel zu der Messelektrode angeordnet.

Eine weitere vorteilhafte Ausgestaltung des magnetisch-induktiven Durchflussmessgerätes zeichnet sich dadurch aus, dass zur Erzeugung des Magnetfeldes in einer Betriebsrichtung von der Steuer- und Auswertevorrichtung zumindest vier Spulen bestromt werden, vorzugsweise Spulen, die symmetrisch zur Achse der Betriebsrichtung liegen.

Eine weitere vorteilhafte Ausgestaltung des magnetisch-induktiven Durchflussmessgerätes zeichnet sich dadurch aus, dass mit den drei Messelektroden drei Messstrecken realisiert sind, dass die Steuer- und Auswertevorrichtung in drei Betriebsmodi drei Magnetfelder mit unterschiedlichen Betriebsrichtungen erzeugt und in der Messsequenz alle drei Betriebsmodi ausführt und drei Messspannungen/drei Durchflussmesswerte aus den drei Messstrecken gewinnt und aus den drei Messspannungen/drei Durchflussmesswerten einen verbesserten Durchflussmesswert gewinnt.

Eine weitere vorteilhafte Ausgestaltung des magnetisch-induktiven Durchflussmessgerätes zeichnet sich dadurch aus, dass genau vier Messelektroden vorgesehen sind, dass die vier Messelektroden von der Mitte des Messrohrs aus gesehen unter Winkeln zwischen 70° und 110° zueinander angeordnet sind, insbesondere symmetrisch unter einem Winkel von 90° zueinander angeordnet sind und dass genau vier Spulen in einem Winkel zwischen 70° und 110° zueinander angeordnet sind, insbesondere symmetrisch in einem Winkel von 90° zueinander angeordnet sind, und in einem Winkel von 35° bis 55°, insbesondere in einem Winkel von 45° zu den Messelektroden angeordnet sind, insbesondere wobei zur Erzeugung des Magnetfeldes in zwei Betriebsrichtungen für jede Betriebsrichtung jeweils alle vier Spulen von der Steuer- und Auswertevorrichtung bestromt werden.

Eine weitere vorteilhafte Ausgestaltung des magnetisch-induktiven Durchflussmessgerätes zeichnet sich dadurch aus, dass genau vier Messelektroden vorgesehen sind, dass die vier Messelektroden von der Mitte des Messrohrs aus gesehen unter Winkeln zwischen 70° und 110° zueinander angeordnet sind, insbesondere symmetrisch unter einem Winkel von 90° zueinander angeordnet sind, und dass acht Spulen vorgesehen sind, insbesondere wobei jeweils zwei der acht Spulen, von der Mitte des Messrohrs aus gesehen, eine Messelektrode zwischen sich haben und zwei Messelektroden jeweils zwei Spulen zwischen sich haben, und dass bevorzugt jeweils vier der acht Spulen jeweils unter einem Winkel von 90° zueinander angeordnet sind und jeweils die beiden einer Messelektrode benachbart angeordneten Spulen unter dem gleichen Winkel zu der Messelektrode angeordnet sind.

Eine weitere vorteilhafte Ausgestaltung des magnetisch-induktiven Durchflussmessgerätes zeichnet sich dadurch aus, dass zur Erzeugung des Magnetfeldes in einer Betriebsrichtung von der Steuer- und Auswertevorrichtung zumindest vier Spulen bestromt werden, vorzugsweise Spulen, die symmetrisch zur Achse der Betriebsrichtung liegen.

Eine weitere vorteilhafte Ausgestaltung des magnetisch-induktiven Durchflussmessgerätes zeichnet sich dadurch aus, dass zur Erzeugung des Magnetfeldes in einer Betriebsrichtung von der Steuer- und Auswertevorrichtung genau vier Spulen bestromt werden, insbesondere die vier Spulen, die symmetrisch zur Achse der Betriebsrichtung liegen und von der Achse der Betriebsrichtung am weitesten beabstandet sind.

Es ist zuvor bereits beschrieben worden, dass die Steuer- und Auswertevorrichtung den Volumenstrom des Mediums beispielsweise durch Mittelwertbildung aus erfassten Messspannungen/Volumenströmen aus den verschiedenen Messungen in verschiedenen Betriebsmodi berechnet. Allgemeiner ausgedrückt ist gemäß einer bevorzugten Weiterbildung vorgesehen, dass die Steuer- und Auswertevorrichtung den Volumenstrom des Mediums aus einer Linearkombination mehrerer der erfassten Messspannungen/berechneten Volumenströme berechnet, insbesondere wobei die Messspannungen/Volumenströme durch Wichtungsfaktoren gewichtet werden. Dazu können Kalibriermessungen mit variierendem, aber bekanntem Volumendurchfluss durchgeführt werden. Um die geeignetste Wahl des linearen Zusammenhangs und/oder der Wichtungsfaktoren zu bestimmen, können die Wichtungsfaktoren und Zusammenhänge durch Optimierungsverfahren bestimmt werden.

Gemäß einer weiteren bevorzugten Weiterbildung des magnetisch-induktiven Durchflussmessgeräts berechnet die Steuer- und Auswertevorrichtung den Volumenstrom des Mediums mit einer nichtlinearen Funktion in mehreren der erfassten Messspannungen/berechneten Volumenströme aus den verschiedenen Betriebsmodi.

Bei einer bevorzugten Weiterbildung des magnetisch-induktiven Durchflussmessgeräts ist die nichtlineare Funktion durch ein künstliches neuronales Netzwerk gebildet mit einer Eingangsschicht mit wenigstens einer Anzahl an Eingangsneuronen entsprechend der Anzahl der erfassten Messspannungen / berechneten Volumenströmen als Eingangsgrößen, mit einer Ausgangsschicht mit wenigstens einem Ausgangsneuron zur Ausgabe zumindest des Volumenstroms des Mediums als Ausgangsgröße und mit zumindest einer Zwischenschicht mit wenigstens zwei Neuronen, insbesondere wobei das künstliche neuronale Netzwerk mit Kalibrierdaten trainiert wird. Die Kalibrierdaten können von realen Kalibriermessungen stammen, sie können aber auch aus entsprechenden numerischen Simulationen stammen, sofern diese vorliegen.

Im Einzelnen gibt es eine Vielzahl an Möglichkeiten, das erfindungsgemäße magnetisch-induktive Durchflussmessgerät auszugestalten und weiterzubilden. Hierzu wird verwiesen auf die dem Patentanspruch 1 untergeordneten Patentansprüche sowie die Beschreibung bevorzugter Ausgestaltungen in Verbindung mit der Zeichnung. In der Zeichnung zeigt

Fig. 1 schematisch ein magnetisch-induktives Durchflussmessgerät mit einem Messrohr, einer Magnetfeldeinrichtung mit Spulen, mit einer Magnetfeldführungsvorrichtung, mit Messelektroden und mit einer Steuer- und Auswertevorrichtung,

Fig. 2 schematisch ein magnetisch-induktives Durchflussmessgerät in einem Schnitt im Bereich der Magnetfeldeinrichtung und erkennbarer Positionen von Spulen und Messeelektroden,

Fig. 3 schematisch ein Ausführungsbeispiel für Betriebsmodi zur Bestromung der Spulen eines magnetisch-induktiven Durchflussmessgeräts und eine Messsequenz,

Fig. 4 schematisch ein weiteres Ausführungsbeispiel für Betriebsmodi zur Bestromung der Spulen eines magnetisch-induktiven Durchflussmessgeräts und eine weitere Messsequenz,

Fig. 5 schematisch ein weiteres Ausführungsbeispiel für Betriebsmodi zur Bestromung der Spulen eines magnetisch-induktiven Durchflussmessgeräts und eine weitere Messsequenz,

Fig. 6 schematisch ein Ausführungsbeispiel unter Verwendung von Zwischen-Betriebsmodi zur Bestromung der Spulen eines magnetisch-induktiven Durchflussmessgeräts,

Fig. 7 schematisch Ausführungsbeispiele für den Betrieb von magnetisch-induktiven Durchflussmessgeräten mit Magnetfeldeinrichtungen mit drei und sechs Spulen und

Fig. 8 schematisch Ausführungsbeispiele für den Betrieb von magnetisch-induktiven Durchflussmessgeräten mit Magnetfeldeinrichtungen mit vier und acht Spulen.

In den Figuren sind schematisch verschiedene Aspekte von hier betrachteten magnetisch induktiven Durchflussmessgeräten 1 gezeigt, teilweise handelt es sich um konstruktive Aspekte, teilweise handelt es sich um Aspekte des Betriebs der magnetisch-induktiven Durchflussmessgeräte 1.

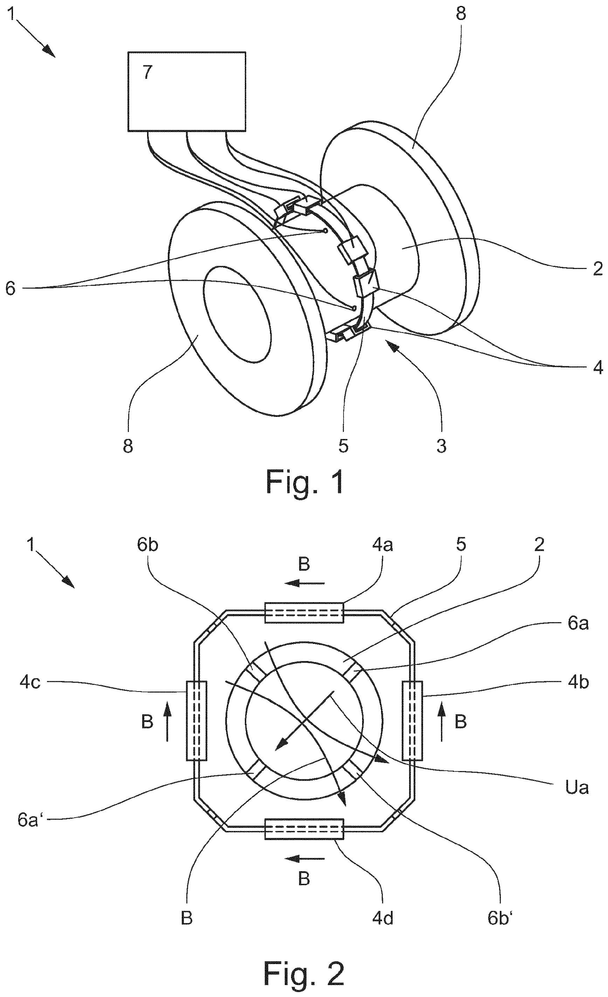

Fig. 1 zeigt ein magnetisch-induktives Durchflussmessgerät 1 mit einem Messrohr 2 zum Führen eines elektrisch leitfähigen Mediums, mit einer Magnetfeldeinrichtung 3, aufweisend eine Mehrzahl von Spulen 4 zur Erzeugung eines das Messrohr 2 zumindest teilweise senkrecht zur Strömungsrichtung des Mediums durchsetzenden Magnetfeldes B, und eine Magnetfeldführungsvorrichtung 5 zur bereichsweisen Führung des Magnetfeldes B außerhalb des Messrohres 2, mit Messelektroden 6 zum Abgreifen wenigstens einer in dem Medium induzierten Messspannung U, und mit einer Steuer- und Auswertevorrichtung 7 zur Erzeugung des Magnetfeldes B durch Bestromung wenigstens einer der Spulen 4 und zur Auswertung der Messspannung U. Das magnetisch-induktive Durchflussmessgerät 1 weist an den Enden des Messrohrs 2 Flansche 8 auf, mit denen es in das Rohrsystem eines fluidtechnischen Prozesses eingebaut werden kann, dessen Durchfluss es bestimmen soll.

Im Stand der Technik sind - hier nicht dargestellte - magnetisch-induktive Durchflussmessgeräte gebräuchlich, die sich von der in Fig. 1 (und auch in den anderen Figuren) dargestellten Ausgestaltung unterscheiden. Häufig besteht die im Stand der Technik umgesetzte Magnetfeldeinrichtung aus zwei Spulen, die sich am Umfang des Messrohrs gegenüber liegen und so angeordnet sind, dass ihre Achsen radial zum Mittelpunkt des Messrohres weisen. Die Spulen werden dann identisch bestromt. Häufig werden Polschuhe realisiert, die konstruktiv die Stellen festlegen, an denen das von den radial ausgerichteten Spulen erzeugte Magnetfeld in den Innenraum des Messrohrs eintritt und auch wieder austritt. Meist sind zwei Messelektroden realisiert, die die in dem strömenden Medium induzierte Messspannung aufnehmen, die im Wesentlichen proportional zu der über den Querschnitt des Messrohrs gemittelten Strömungsgeschwindigkeit des Mediums in dem Messrohr ist.

Demgegenüber zeichnen sich die hier dargestellten magnetisch-induktiven Durchflussmessgeräte 1 dadurch aus, dass die Magnetfeldführungsvorrichtung 5 geschlossen in Umfangsrichtung um das Messrohr 2 erstreckt ist, wobei die Spulen 4 über den Umfang der Magnetfeldführungsvorrichtung 5 verteilt angeordnet sind und die Magnetfeldführungsvorrichtung 5 im Bereich der Spulen 4 als Spulenkern wirkt, sodass die Spulen 4 mit ihren Spulenlängsachsen ebenfalls in Umfangsrichtung zum Messrohr 2 angeordnet sind. Dabei sind wenigstens drei Spulen 4 und wenigstens drei Messelektroden 6 vorgesehen, wobei jede der Messelektroden 6 in radialer Richtung von der Mitte des Messrohrs 3 aus gesehen zwischen zwei Spulen 4 angeordnet ist.

Die in den Figuren dargestellten magnetisch-induktiven Durchflussmessgeräte 1 haben die Eigenschaft, dass die Positionen der Spulen 4 den Eintrittsbereich des Magnetfeldes B in das Messrohr 2 konstruktiv nicht streng definieren, da die Spulen 4 mit ihren Spulenlängsachsen in Umfangsrichtung zum Messrohr 2 angeordnet sind. Durch die Anordnung der Spulen 4 über den Umfang der Magnetfeldführungsvorrichtung 5 kann durch die gezielte Bestromung der Spulen 4 bestimmt werden, wo das durch die Spulen 4 erzeugte Magnetfeld B in das Messrohr 2 ein- und austritt, sodass durch gezielte Bestromung der Spulen 4 durch die Steuer- und Auswertevorrichtung 7 das Magnetfeld B in seiner Richtung grundsätzlich veränderlich ist. Dem liegt das Verständnis zugrunde, dass es sich bei den Ein- und Austrittsstellen des Magnetfeldes B nicht um punktuelle Orte auf dem Umfang der Magnetfeldführungsvorrichtung 5 handelt, sondern um Bereiche mit einer gewissen Ausdehnung. Diese Bereiche lassen sich mit diesem Verständnis durch Bestromung der Spulen 4 variieren und einstellen. Dadurch wird deutlich, dass jedenfalls die Positionen der Spulen 4 selbst nicht die maßgeblichen Eintrittsorte des Magnetfeldes B in das Messrohr 2 und auch nicht die maßgeblichen Austrittsorte des Magnetfeldes B aus dem Messrohr 2 sind. Wie im allgemeinen Beschreibungsteil bereits ausgeführt, ist mit der Richtungsänderung des Magnetfeldes B keine einfache Umpolung des Magnetfeldes B gemeint, sondern eine Richtungsänderung des Magnetfeldes B jenseits der Antiparallelität. Die beschriebene Anordnung der Spulen 4 um die in Umfangsrichtung des Messrohrs erstreckte Magnetfeldführungsvorrichtung 5 ermöglicht zudem platzsparende Konstruktionen, da kein zusätzlicher Platz in Richtung auf das Messrohr 2 erforderlich ist (siehe Fig. 1).

Durch mindestens drei Spulen 4 ist sichergestellt, dass eine beschriebene Richtungsänderung des Magnetfeldes B - und nicht nur eine einfache Richtungsumkehr - realisierbar ist. Durch mindestens drei Messeelektroden 6 ist wiederum gewährleistet, dass mehr als eine Messstrecke durch den Querschnitt des Messrohrs 2 realisiert werden kann. Die angegebenen Konstruktionsvorgaben ermöglichen also grundsätzlich, eine über den Querschnitt des Messrohrs 2 veränderliche Anregung des Mediums und auch eine über den Querschnitt des Messrohrs 2 veränderliche geometrische Realisierungen von Messstrecken, wodurch eine Vielzahl von unter verschiedenen geometrischen Randbedingungen erhobene Durchflussinformationen über den Querschnitt des Messrohrs 2 erfasst werden kann, durch deren Verrechnung in der Durchflussmessung eine bemerkenswerte Unabhängigkeit von veränderlichen Strömungsprofilen erzielbar ist.

Bei dem Ausführungsbeispiel gemäß Fig. 1 bildet die Magnetfeldführungsvorrichtung 5 einen bogenförmigen gekrümmten Ring, der im Wesentlichen kreisförmig geformt ist. Die Geometrie ist relativ einfach umsetzbar und weist prinzipbedingt keine der Form geschuldeten Ortsabhängigkeiten auf, insbesondere nicht hinsichtlich der durch Bestromung der Spulen beeinflussbaren Ein- und Austrittsstellen des Magnetfeldes B in das Messrohr 2 und aus dem Messrohr 2.

Eine weitere Ausgestaltung eines magnetisch-induktiven Durchflussmessgeräts 1 zeigt schematisch Fig. 2, wobei hier anhand eines Querschnitts durch den Bereich der Magnetfeldeinrichtung 3 und der Magnetfeldführungsvorrichtung 5 einschließlich der darauf aufgebrachten Spulen 4 die Verhältnisse besser erkennbar sind hinsichtlich der Anordnung der Spulen 4 und der Messeelektroden 6. Auch wird anhand Fig. 2 prinzipiell erkennbar, wie mit der konstruktiven Ausgestaltung - eine entsprechend variierende Bestromung der Spulen 4 vorausgesetzt - eine räumlich variierende Abdeckung der Anregung des Mediums durch prinzipiell richtungsveränderlich einstellbare Magnetfelder B und auch eine richtungsveränderliche Realisierung von Messstrecken realisiert werden kann.

Bei dem Ausführungsbeispiel gemäß Fig. 2 bildet die Magnetfeldführungsvorrichtung 5 einen polygonalen, hier achteckigen, Ring. Der polygonale Ring weist abwechselnd lange und kurze Schenkel auf, wobei auf den langen Schenkeln die Spulen 4 angeordnet sind.

In dem Ausführungsbeispiel gemäß Fig. 2 sind die Spulen 4a, 4b so bestromt, dass sie bezüglich der Magnetfeldführungsvorrichtung 5 ein Magnetfeld B in einer Orientierungsrichtung erzeugen, und die Spulen 4c, 4d sind so bestromt, dass sie im Hinblick auf die Magnetfeldführungsvorrichtung 5 ein Magnetfeld B in entgegengesetzter Durchlaufungsrichtung erzeugen. Das Gesamtmagnetfeld B tritt zwischen den Spulen 4a und 4c in den Freiraum und in das Messrohr 2 ein, durchläuft das Messrohr 2 und tritt zwischen den Spulen 4b, 4d wieder in die Magnetfeldführungsvorrichtung 5 ein. Der Bezeichner B ist hier nicht als arithmetisches Formelzeichen zu verstehen.

In der Wandung des Messrohrs 2 sind insgesamt 4 Messelektroden 6a, 6a', 6b, 6b' vorgesehen. Zwischen den Messeelektroden 6 können verschiedene Messspannungen U aufgenommen werden. In dem dargestellten Ausführungsbeispiel wird eine Messspannung Ua aufgenommen zwischen den Messelektroden 6a und 6a'. Aus Gründen der Übersichtlichkeit ist in Fig. 2 nicht dargestellt, dass die Spulen 4 in einer anderen Betriebsart teilweise verschieden bestromt werden von der dargestellten Betriebsweise. In dieser nicht dargestellten Betriebsart wird die Bestromungsrichtung der Spulen 4b, 4c umgekehrt, sodass sich auch die Richtungen der durch die Spulen 4b, 4c erzeugten Magnetfelder bezüglich der Magnetfeldführungsvorrichtung 5 umkehren. Klar ersichtlich bewirkt dies, dass das resultierende Magnetfeld B zwischen den Spulen 4c, 4d in den Freiraum und in das Messrohr 2 eintritt, das Messrohr 2 durchläuft und zwischen den Spulen 4a, 4b wieder in die Magnetfeldführungsvorrichtung 5 eintritt. Natürlich ist es möglich, dass das Freiraummagnetfeld im Randbereich direkt aus den Spulen 4 Austritt und im Randbereich auch direkt in die Spulen 4 eintritt. Hierbei handelt es sich aber um Streufelder, der maßgebliche Anteil des Magnetfelds B verhält sich wie beschrieben. Die Richtung des Magnetfeldes B kann noch anderweitig variiert werden, beispielsweise indem die Bestromungsstärke in den Spulen 4 variiert wird. Die Orientierungen der jeweiligen Messstrecken zwischen den Messeelektroden 6, zwischen denen eine Messspannung U aufgenommen wird, ist nicht veränderlich, sie ist fest vorgegeben durch die feste Einbauposition der Messeelektroden 6. In allen Ausführungsbeispielen sind die Messeelektroden 6 in radialer Richtung von der Mitte des Messrohrs 2 aus gesehen zwischen zwei Spulen 4 angeordnet. Neben dem Vorteil, dass die Messeelektroden 6 so besser zugänglich sind (Montage, elektrische Kontaktierung), bringt dies konstruktiv ferner den Vorteil mit sich, dass die mit den Messeelektroden 6 realisierbaren Messpfade in der Mehrzahl geneigt sind zu dem Verlauf erzeugbarer Magnetfelder B und damit jedenfalls teilweise in Richtung des Verlaufs einer elektrischen Potenzialänderung (induzierte elektrische Spannung) verlaufen.

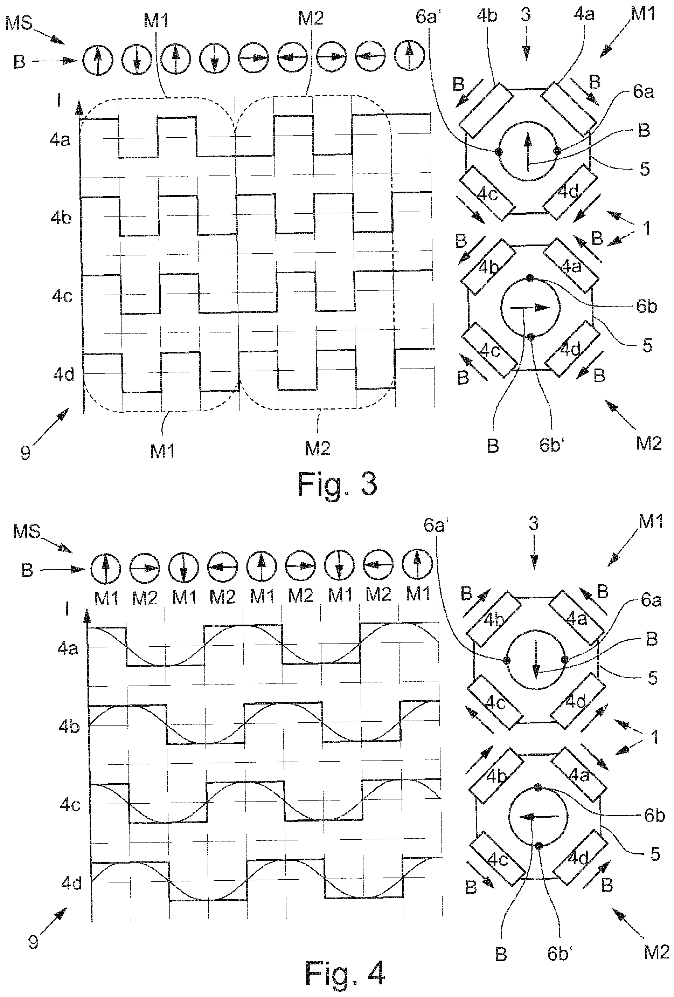

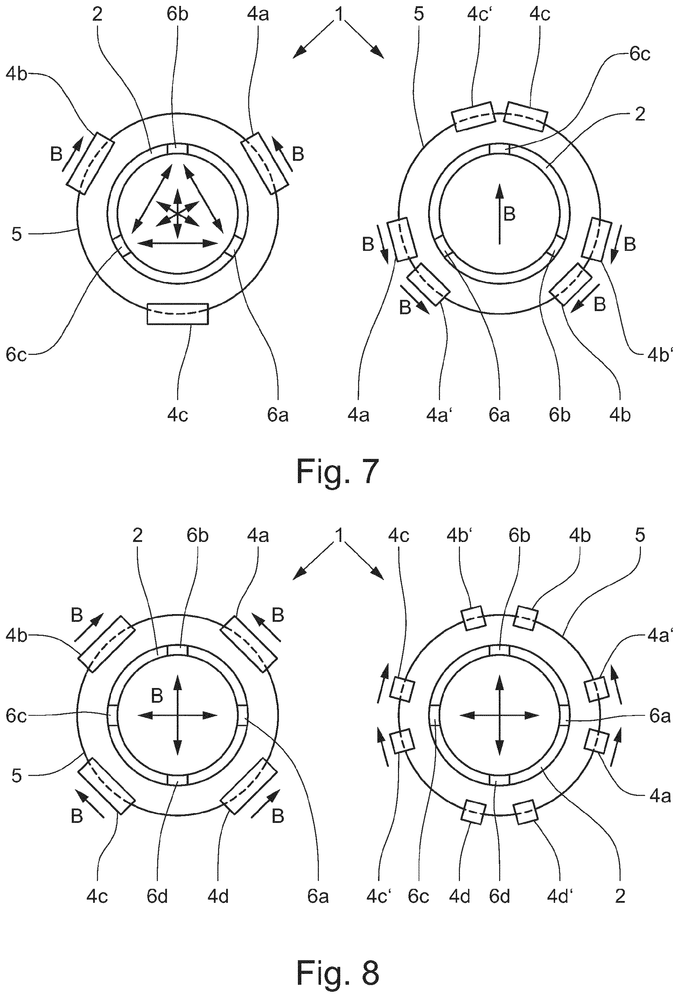

In den Fig. 3 bis 6 sind verschiedene Betriebsmodi dargestellt, die sich im Wesentlichen damit befassen, wie die Spulen 4 bestromt werden, um bestimmte Magnetfeldrichtungen zu erzeugen. Die Betriebsmodi sind sinngemäß übertragbar auch auf die magnetisch-induktiven Durchflussmessgeräte 1, die schematisch in den Fig. 7 und 8 dargestellt sind. Die Darstellungen in den Fig. 3 bis 6 beziehen sich dabei auf das in Fig. 2 dargestellte magnetisch-induktive Durchflussmessgerät 1 mit vier Spulen 4a, 4b, 4c, 4d und mit vier Messeelektroden 6a, 6a', 6b, 6b'.

Gemeinsam ist allen gezeigten magnetisch induktiven Durchflussmessgeräten 1, dass die Steuer- und Auswertevorrichtung 7 zumindest einen Teil der Spulen 4 in wenigstens einem ersten Betriebsmodus M1 so bestromt, dass das erzeugte Magnetfeld B im Bereich des Messrohres 2 in einer ersten Betriebsrichtung ausgerichtet ist und dass die Steuer- und Auswertevorrichtung 7 zumindest einen Teil der Spulen 4 in wenigstens einem zweiten Betriebsmodus M2 so bestromt, dass das erzeugte Magnetfeld B im Bereich des Messrohres 2 in einer von der ersten Betriebsrichtung verschiedenen zweiten Betriebsrichtung ausgerichtet ist. Zu bemerken ist hier wieder, dass eine Richtung mathematisch aufzufassen ist, also definiert durch eine Gerade, die zwei Orientierungen hat, eine erste Orientierung und die dazu antiparallele Orientierung. Eine Orientierungsumkehr ist also keine Richtungsänderung.

In den in den Fig. 3 bis 6 dargestellten Ausführungsbeispielen gibt es jedenfalls 2 Betriebsmodi M1 und M2, die im Zusammenhang mit der konstruktiven Ausgestaltung des magnetisch-induktiven Durchflussmessgeräts 1 gemäß Fig. 2 dazu führen, dass in den zwei verschiedenen Betriebsmodi M1 und M2 ein Magnetfeld B in senkrecht aufeinander stehenden Magnetfeldrichtungen erzeugt wird. Dargestellt sind jeweils auch Bestromungsdiagramme 9, die die Bestromung der vier beteiligten Spulen 4a, 4b, 4c, 4d mit einem Strom I über der Zeit dokumentieren. Über den Bestromungsdiagrammen 9 sind jeweils die sich ergebenden Magnetfeldrichtungen des Magnetfelds B angegeben, was leicht nachvollziehbar ist in Zusammenhang mit den Darstellungen der Magnetfeldeinrichtungen 3 mit den Spulen 4a, 4b, 4c, 4d. In die Bestromungsdiagramme 9 sind jeweils eingezeichnet die Betriebsmodi M1, M2.

In den Darstellungen der Magnetfeldeinrichtungen 3 mit dem Messrohr 2, den Spulen 4 und der Magnetfeldführungsvorrichtung 5 sind jeweils auch die an der Messung der induzierten Messspannung U in dem jeweiligen Betriebsmodus M1, M2 beteiligten Messeelektroden 6a, 6a' oder 6b, 6b' angedeutet.

Den in den Fig. 3 bis 6 teilweise dargestellten magnetisch-induktiven Durchflussmessgeräten 1 ist ebenfalls gemeinsam, dass die Messelektroden 6 in radialer Richtung von der Mitte des Messrohrs 2 aus gesehen so zwischen zwei Spulen 4 angeordnet sind, dass ein erstes Paar 6a, 6a' der Messelektroden 6 eine erste Messstrecke mit einer ersten Messstreckenrichtung bilden, wobei die erste Messstreckenrichtung und die erste Betriebsrichtung des Magnetfeldes B gegeneinander geneigt sind, vorliegend 90° zueinander geneigt sind, und dass ein zweites Paar 6b, 6b' der Messelektroden 6 eine zweite Messstrecke mit einer zweiten Messstreckenrichtung bilden, wobei die zweite Messstreckenrichtung und die zweite Betriebsrichtung des Magnetfeldes B gegeneinander geneigt sind, vorliegend ebenfalls 90° zueinander geneigt sind.

Im Fall des Betriebsmodus M1 nehmen die Messeelektroden 6a, 6a' eine Messspannung U auf, und im Betriebsmodus M2 nehmen die Messeelektroden 6b, 6b' die Messspannung U auf. In beiden Fällen ist die Messspannung U senkrecht zur Richtung des Magnetfeldes B. Damit wird ein maximaler Induktionseffekt erzielt.

Den magnetisch-induktiven Durchflussmessgeräten 1 in den Fig. 3 bis 6 ist ebenfalls gemeinsam, dass die Steuer- und Auswertevorrichtung 7 zur Ermittlung eines verbesserten Durchflussmesswertes Vp in einer Messsequenz MS wenigstens einmal den ersten Betriebsmodus M1 durchführt und im ersten Betriebsmodus M1 mit dem ersten Paar der Messeelektroden 6 eine erste Messspannung U1 und/oder einen ersten Durchflussmesswert Vp1 ermittelt, und wenigstens einmal den zweiten Betriebsmodus M2 durchführt und im zweiten Betriebsmodus M2 mit dem zweiten Paar der Messelektroden 6 eine zweite Messspannung U2 und/oder einen zweiten Durchflussmesswert Vp2 ermittelt und aus der ersten Messspannung U1 und der zweiten Messspannung U2 und/oder aus dem ersten Durchflussmesswert Vp1 und dem zweiten Durchflussmesswert Vp2 den verbesserten Durchflussmesswert Vp ermittelt, insbesondere durch Mittelwertbildung. Allgemein gilt also:

$$Vp = f(U1, U2)$$

oder

$$Vp = f(Vp1(U1), Vp2(U2)).$$

Dabei ist f insbesondere die Mittelwertbildung aus den Argumenten. Wie in den Fig. 3 bis 5 dargestellt ist, werden auch mehrere Messspannungen in einer Messsequenz MS in jedem Betriebsmodus M1, M2 erfasst. Es gilt in den Ausführungsbeispielen, dass die Steuer- und Auswertevorrichtung 7 in der Messsequenz MS den ersten Betriebsmodus M1 mindestens zweimal durchführt (in den Fig. 3 bis 5 sogar vier mal), sodass das Magnetfeld B in der einen Orientierung der ersten Betriebsrichtung des Magnetfeldes B und in der anderen Orientierung der ersten Betriebsrichtung des Magnetfeldes B erzeugt wird, und entsprechende Sub-Messspannungen Us1.1, Us1.2 / Sub-Durchflussmesswerte Vps1.1, Vps1.2 bei jeder Orientierung der ersten Betriebsrichtung des Magnetfeldes B mit dem ersten Paar der Messelektroden 6 aufgenommen werden und aus den Sub-Messspannungen Us1.1, Us1.2 / Sub-Durchflussmesswerten Ups1.1, Ups1.2 der erste Durchflussmesswert Vp1 berechnet wird, und dass die Steuer- und Auswertevorrichtung 7 in der Messsequenz MS den zweiten Betriebsmodus M2 mindestens zweimal durchführt, sodass das Magnetfeld B in der einen Orientierung der zweiten Betriebsrichtung des Magnetfeldes B und in der anderen Orientierung der zweiten Betriebsrichtung des Magnetfeldes B erzeugt wird und entsprechende Sub-Messspannungen Us2.1, Us2.2 / Sub-Durchflussmesswerte Vp2.1, Vp2.2 bei jeder Orientierung der zweiten Betriebsrichtung des Magnetfeldes B mit dem zweiten Paar der Messelektroden 6 aufgenommen werden und aus den Sub-Messspannungen Us2.1, Us2.2 / Sub-Durchflussmesswerten Vp2.1, Vp2.2 der zweite Durchflussmesswert Vp2 berechnet wird. Es gilt also:

$$U1 = g(Us1.1, Us1.2), \; U2 = g(Us2.1, Us2.2)$$

$$Vp1 = h(Vp1.1, Vp1.2), \; Vp2 = h(Vp2.1, Vp2.2).$$

Die Verwendung mehrerer Messspannungen Ui in einer ersten Richtung und in einer dazu antiparallelen Richtung bzw. in einer zweiten Richtung und in einer dazu antiparallelen Richtung machen insoweit Sinn, als sich durch dieses Verfahren elektrochemische Störspannungen, die von der Magnetfeldrichtung unabhängig sind, herausmitteln lassen.

Bei dem magnetisch-induktiven Durchflussmessgerät 1 gemäß Fig. 3 ist realisiert, dass die Steuer- und Auswertevorrichtung 7 die Messsequenz MS zumindest zeitweise so ausführt, dass zunächst nacheinander das Magnetfeld B in den beiden Orientierungen der ersten Betriebsrichtung, also im Betriebsmodus M1 (alternativ: in der zweiten Betriebsrichtung, also im Betriebsmodus M2) und dann nacheinander das Magnetfeld B in den beiden Orientierungen der zweiten Betriebsrichtung, also im Betriebsmodus M2 (alternativ: in der ersten Betriebsrichtung, also im Betriebsmodus M1) erzeugt wird, wobei die Orientierungen der Betriebsrichtungen M1, M2 auch mehrfach abwechselnd nacheinander angesteuert werden; im Ausführungsbeispiel jeweils zweimal hintereinander.

Bei dem magnetisch-induktiven Durchflussmessgerät 1 gemäß Fig. 4 ist realisiert, dass die Steuer- und Auswertevorrichtung 7 die Messsequenz MS zumindest zeitweise so ausführt, dass die Orientierungen wenigstens zweier Betriebsrichtungen des Magnetfeldes B (und damit die Betriebsmodi Mi) nacheinander so angesteuert werden, dass in axialer Richtung des Messrohres 2 gesehen ein schrittweise rotierendes Magnetfeld B resultiert. Ein interessanter Aspekt des Ausführungsbeispiels ist ferner, dass die Bestromung der Spulen 4 hier in zwei alternativen Realisierungen gezeigt ist. Zum einen ist gezeigt, dass die Steuer- und Auswertevorrichtung 7 eine Änderung der Bestromung der Spulen 4 möglichst sprungförmig bzw. rechteckförmig realisiert. Bei der realisierten Abfolge von Betriebsmodi Mi ist es zum anderen aber auch möglich, dass die Steuer- und Auswertevorrichtung 7 die Änderung der Bestromung der Spulen 4 kontinuierlich sinusförmig realisiert, was im gleichen Bestromungsdiagramm 9 gezeigt ist.

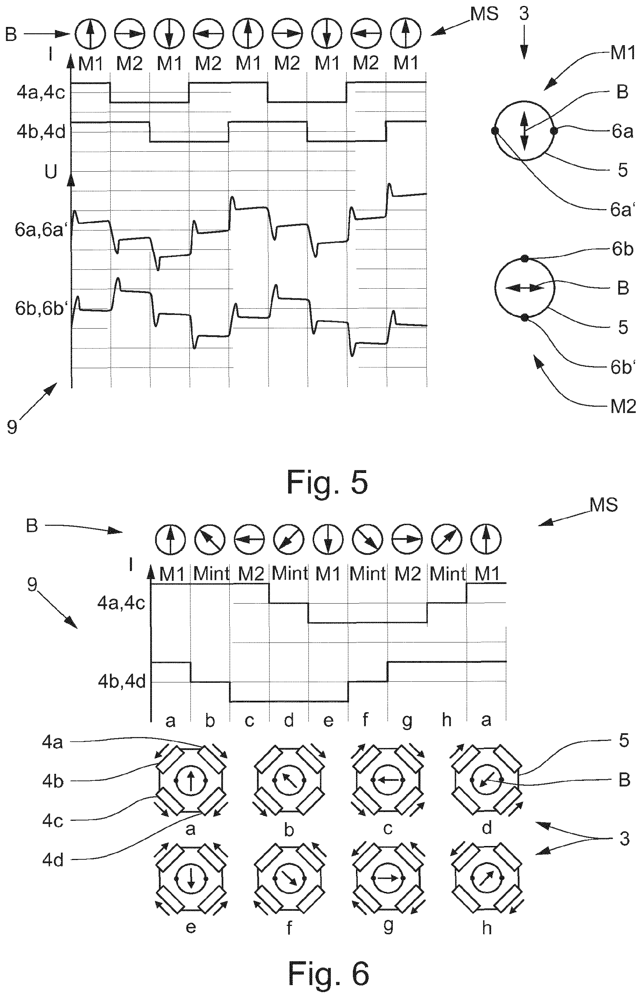

In Fig. 5 sind nicht nur das Bestromungsdiagramm 9 mit den Strömen I dargestellt, mit denen die Spulen 4a, 4c und 4b, 4d beaufschlagt werden, sondern es sind auch die zeitlichen Verläufe der Messspannungen U an den Messelektrodenpaaren 6a, 6a' und 6b, 6b' dargestellt. An den Spannungsverläufen ist zu erkennen, dass eine linear ansteigende elektrochemische Elektrodenspannung der induzierten Spannung überlagert ist, wobei hier davon ausgegangen wird, dass die Strömungsgeschwindigkeit und damit der Volumenstrom in dem dargestellten Zeitraum unveränderlich ist. Diese Elektrodenspannung kann mit bekannten Maßnahmen rechnerisch eliminiert werden (zum Beispiel durch erfassen und verrechnen von Sub-Messspannungen bzw. von Sub-Durchflussmesswerten). Es ist ferner zu erkennen, dass die sprungartige Veränderung der Bestromung der Spulen 4 eine Wirkung auf beide erfassten Messspannungen Ui hat. Messwerte sollten also erst dann aufgenommen werden, wenn diese transienten Störungen abgeklungen sind.

Das magnetisch-induktive Durchflussmessgerät 1 gemäß Fig. 6 weist die Besonderheit auf, dass die Steuer- und Auswertevorrichtung 7 einen Teil der Spulen 4 in wenigstens einem Zwischen-Betriebsmodus Mint so bestromt, dass das erzeugte Magnetfeld B im Bereich des Messrohres 2 in einer Zwischen-Betriebsrichtung ausgerichtet ist, wobei die Zwischen-Betriebsrichtung von der ersten Betriebsrichtung im ersten Betriebsmodus M1 und der zweiten Betriebsrichtung im zweiten Betriebsmodus M2 und gegebenenfalls weiteren Betriebsrichtungen verschieden ausgerichtet ist. Vorliegend werden zur Erzeugung des Magnetfeldes B in der Zwischen-Betriebsrichtung im Zwischen-Betriebsmodus Mint weniger Spulen 4 bestromt als zur Erzeugung des Magnetfeldes B in den Betriebsrichtungen in den Betriebsmodi M1, M2 bestromt werden.

Bei einem hier nicht ausdrücklich dargestellten magnetisch-induktiven Durchflussmessgerät 1 ist realisiert, dass die Steuer- und Auswertevorrichtung 7 zumindest einen Teil der Spulen 4 in wenigstens einem Zwischen-Betriebsmodus Mint mit unterschiedlich hohen Strömen bestromt, sodass das erzeugte Magnetfeld B im Bereich des Messrohres 2 in einer Zwischen-Betriebsrichtung ausgerichtet ist, wobei die Zwischen-Betriebsrichtung von der ersten Betriebsrichtung im ersten Betriebsmodus M1 und der zweiten Betriebsrichtung im zweiten Betriebsmodus M2 und gegebenenfalls von weiteren Betriebsrichtungen verschieden ist, insbesondere wobei zur Erzeugung des Magnetfeldes B in der Zwischen-Betriebsrichtung weniger Spulen 4 bestromt werden als zur Erzeugung des Magnetfeldes B in den Betriebsrichtungen bestromt werden.

Die Realisierung des Zwischenbetriebsmodus Mint ist dann sinnvoll, wenn die Steuer- und Auswertevorrichtung 7 zur Ermittlung eines verbesserten Durchflussmesswertes Vp in einer Messsequenz MS neben den Messspannungen Ui/Durchflussmesswerten Vpi aus dem wenigsten ersten Betriebsmodus M1 und dem wenigsten zweiten Betriebsmodus M2 mit einem Paar von Messelektroden 6 im Zwischen-Betriebsmodus Mint wenigstens eine Zwischen-Messspannung Uint/ einen Zwischen-Durchflussmesswert Vpint ermittelt und aus der ersten Messspannung U1/dem ersten Durchflussmesswert Vp1, der zweiten Messspannung U2/dem zweiten Durchflussmesswert Vp2 und der Zwischen-Messspannung Uint / dem Zwischen-Durchflussmesswert Vpint den verbesserten Durchflussmesswert Vp ermittelt, insbesondere durch Mittelwertbildung. Es gilt demnach:

$$Vp = i(U1, U2, Uint)$$

$$Vp = i(Vp1, Vp2, Vpint).$$

Fig. 7 zeigt zwei magnetisch-induktive Durchflussmessgeräte 1 mit genau drei Messelektroden 6a, 6b, 6c, wobei die drei Messelektroden 6a, 6b, 6c von der Mitte des Messrohrs 2 aus gesehen unter Winkeln von etwa 120° zueinander angeordnet sind. In dem Ausführungsbeispiel links sind genau drei Spulen 4a, 4b, 4c ebenfalls in einem Winkel von etwa 120° zueinander angeordnet, zu den Messelektroden 6a, 6b, 6c sind die Spulen 4a, 4b, 4c in einem Winkel von etwa 60° angeordnet. Zur Erzeugung des Magnetfeldes B in drei Betriebsrichtungen werden für jede Betriebsrichtung jeweils zwei der Spulen 4 von der Steuer- und Auswertevorrichtung 7 bestromt, und zwar so bestromt, dass sie in Bezug auf die Magnetfeldführungsvorrichtung 5 gegenläufige Magnetfelder B erzeugen. Die möglichen Magnetfeldrichtungen sind in Fig. 7 links angedeutet, genau wie auch die Richtungen der realisierten Messstrecken. Über den Querschnitt des Messrohrs 2 wird also eine Vielzahl an geometrisch unterschiedlich verteilten Strömungsinformationen erhalten, sodass bei Berechnung des Durchflussmesswertes Vp in Abhängigkeit von allen über die verschiedenen Messstrecken erzielten Durchflussinformation (Messspannungen oder Sub-Durchflussmesswerte) ein von dem tatsächlichen Strömungsprofil weitestgehend unabhängiger Durchflussmesswert Vp berechnet wird.

Das rechts in Fig. 7 dargestellte magnetisch-induktive Durchflussmessgerät 1 hat ebenfalls genau drei Messelektroden 6a, 6b, 6c, wobei die drei Messelektroden 6a, 6b, 6c von der Mitte des Messrohrs 2 aus gesehen unter Winkeln von etwa 120° zueinander angeordnet sind. Es sind jedoch sechs Spulen 4a, 4a', 4b, 4b', 4c, 4c' vorgesehen, wobei jeweils zwei 4a, 4a'; 4b, 4b'; 4c, 4c' der sechs Spulen 4a, 4a', 4b, 4b', 4c, 4c' von der Mitte des Messrohrs 2 aus gesehen eine Messelektrode 6a, 6b, 6c zwischen sich haben und zwei Messelektroden 6a, 6b; 6b, 6c; 6c, 6a jeweils zwei Spulen 4a', 4b; 4b', 4c; 4c', 4a zwischen sich haben. Jeweils drei 4a, 4b, 4c; 4a', 4b', 4c' der sechs Spulen 4a, 4a', 4b, 4b', 4c, 4c' sind jeweils unter einem Winkel von etwa 120° zueinander angeordnet und jeweils die beiden einer Messelektrode 6a, 6b, 6c benachbart angeordneten Spulen 4a, 4a'; 4b, 4b'; 4c, 4c' sind unter dem gleichen Winkel zu der Messelektrode 6a, 6b, 6c angeordnet. In der Fig. 7 rechts ist aus Gründen der Übersichtlichkeit nur eine Bestromungssituation dargestellt. Allgemein werden zur Erzeugung des Magnetfeldes B in einer Betriebsrichtung von der Steuer- und Auswertevorrichtung 7 vier Spulen 4a, 4a', 4b, 4b', 4c, 4c' bestromt, hier die Spulen 4a, 4a', 4b, 4b', 4c, 4c', die symmetrisch zur Achse der Betriebsrichtung angeordnet sind; in dem Ausführungsbeispiel sind das die Spulen 4a, 4a' und 4b, 4b'. Die Messspannung U wird über die Messstrecke zwischen den Messelektroden 6a, 6b aufgenommen. In zwei anderen Betriebsmodi werden sinngemäß immer vier der Spulen bestromt und eine Sub-Messspannung aufgenommen, die in einer Messstrecke senkrecht zu der Betriebsrichtung des Magnetfeldes B liegt. Allgemein formuliert, werden mit den drei Messelektroden 6a, 6b, 6c drei Messstrecken realisiert, wobei die Steuer- und Auswertevorrichtung 7 in drei Betriebsmodi drei Magnetfelder B mit unterschiedlichen Betriebsrichtungen erzeugt und die Steuer-und Auswertevorrichtung 7 in der Messsequenz MS alle drei Betriebsmodi ausführt und drei Messspannungen Ui / Durchflussmesswerte Vpi aus den drei Messstrecken gewinnt und aus den drei Messspannungen Ui /Durchflussmesswerten Vpi einen verbesserten Durchflussmesswert Vp gewinnt.

In Fig. 8 sind magnetisch-induktive Durchflussmessgeräte 1 mit genau vier Messelektroden 6a, 6b, 6c, 6d gezeigt.

Die linke Darstellung in Fig. 8 zeigt eine Ausgestaltung, die prinzipiell schon aus Fig. 2 bekannt ist. Die vier Messelektroden 6a, 6b, 6c, 6d sind von der Mitte des Messrohrs 2 aus gesehen unter Winkeln von etwa 90° zueinander angeordnet. Vier Spulen 4a, 4b, 4c, 4d sind in einem Winkel von etwa 90° zueinander angeordnet. Ferner sind die vier Spulen 4a, 4b, 4c, 4d jeweils in einem Winkel von 45° zu den Messelektroden 6a, 6b, 6c, 6d angeordnet. Zur Erzeugung des Magnetfeldes B in zwei Betriebsrichtungen werden für jede Betriebsrichtung jeweils alle vier Spulen 4a, 4b, 4c, 4d von der Steuer- und Auswertevorrichtung 7 bestromt. Dargestellt ist der Fall, dass das Magnetfeld B in vertikaler Richtung erzeugt wird.

Die rechte Darstellung in Fig. 8 zeigt eine Ausgestaltung des magnetisch-induktiven Durchflussmessgeräts die genau vier Messelektroden 6a, 6b, 6c, 6d aufweist, wobei die vier Messelektroden 6a, 6b, 6c, 6d von der Mitte des Messrohrs 2 aus gesehen unter Winkeln von jeweils 90° zueinander angeordnet sind. Es sind acht Spulen 4a, 4a', 4b, 4b', 4c, 4c', 4d, 4d' vorgesehen, wobei jeweils zwei 4a, 4a'; 4b, 4b'; 4c, 4c'; 4d, 4d' der acht Spulen 4a, 4a', 4b, 4b', 4c, 4c', 4d, 4d' von der Mitte des Messrohrs 2 aus gesehen eine Messelektrode 6a; 6b; 6c; 6d zwischen sich haben, und wobei zwei Messelektroden 6a, 6b; 6b, 6c; 6c, 6d; 6d, 6a jeweils zwei Spulen 4a', 4b; 4b', 4c; 4c', 4d; 4d', 4a zwischen sich haben. Jeweils vier 4a, 4b, 4c, 4d; 4a', 4b', 4c', 4d' der acht Spulen 4a, 4a', 4b, 4b', 4c, 4c', 4d, 4d' sind jeweils unter einem Winkel von 90° zueinander angeordnet und jeweils die beiden einer Messelektrode 6a, 6b, 6c, 6d benachbart angeordneten Spulen 4a, 4a'; 4b, 4b'; 4c, 4c'; 4d, 4d' sind unter dem gleichen Winkel zu der Messelektrode 6a, 6b, 6c, 6d angeordnet. Die Ausgestaltung zeigt eine sehr hohe Symmetrie.

Das rechts in Fig. 8 dargestellte magnetisch-induktive Durchflussmessgerät 1 zeichnet sich dadurch aus, dass zur Erzeugung des Magnetfeldes B in einer Betriebsrichtung von der Steuer- und Auswertevorrichtung 7 zumindest vier Spulen 4 bestromt werden, nämlich Spulen 4, die symmetrisch zur Achse der Betriebsrichtung liegen. Im Ausführungsbeispiel ist die vertikale Betriebsrichtung des Magnetfeldes B gezeigt, die erzeugt wird durch Bestromung der Spulen 4a, 4a', 4c, 4c'.

Bei der Auslegung des magnetisch-induktiven Durchflussmessgeräts 1 rechts in Fig. 8 ist berücksichtigt worden, dass zur Erzeugung des Magnetfeldes B in einer Betriebsrichtung von der Steuer- und Auswertevorrichtung 7 genau vier Spulen 4 bestromt werden, die symmetrisch zur Achse der Betriebsrichtung liegen und von der Achse der Betriebsrichtung am weitesten beabstandet sind. So lassen sich breite Magnetfelder B erzeugen, die einen großen Teil des Querschnitts des Messrohres 2 durchdringen.

**Bezugszeichen**

1    magnetisch-induktives Durchflussmessgerät
2    Messrohr
3    Magnetfeldeinrichtung
4    Spulen
5    Magnetfeldführungsvorrichtung
6    Messelektroden
7    Steuer- und Auswertevorrichtung
8    Flansche
9    Bestromungsdiagramme

B        Magnetfeld
U        Messspannung
M1, M2   Betriebsmodi
Us       Sub-Messspannung
Usi      i-te Sub-Messspannung

Uint      Zwischen-Messspannung
Vp        Durchflussmesswert
Vpi       i-ter Durchflussmesswert
Vps       Sub-Durchflussmesswert
Vpsi      i-te Sub-Durchflussmesswert
Vpint     Zwischen-Durchflussmesswert
MS        Messsequenz

**Patentansprüche**

1. Magnetisch-induktives Durchflussmessgerät (1), mit einem Messrohr (2) zum Führen eines elektrisch leitfähigen Mediums, mit einer Magnetfeldeinrichtung (3) aufweisend eine Mehrzahl von Spulen (4) zur Erzeugung eines das Messrohr (2) zumindest teilweise senkrecht zur Strömungsrichtung des Mediums durchsetzenden Magnetfeldes (B) und eine Magnetfeldführungsvorrichtung (5) zur bereichsweisen Führung des Magnetfeldes (B) außerhalb des Messrohres (2), mit Messelektroden (6) zum Abgreifen wenigstens einer in dem Medium induzierten Messspannung (U), und mit einer Steuer- und Auswertevorrichtung (7) zur Erzeugung des Magnetfeldes (B) durch Bestromung wenigstens einer der Spulen (4) und zur Auswertung der Messspannung (U) zu einem Durchflussmesswert (Vp),

   wobei die Magnetfeldführungsvorrichtung (5) geschlossen in Umfangsrichtung um das Messrohr (2) erstreckt ist, wobei die Spulen (4) über den Umfang der Magnetfeldführungsvorrichtung (5) verteilt angeordnet sind und die Magnetfeldführungsvorrichtung (5) im Bereich der Spulen (4) als Spulenkern wirkt, sodass die Spulen (4) mit ihren Spulenlängsachsen ebenfalls in Umfangsrichtung zum Messrohr (2) angeordnet sind,
   **dadurch gekennzeichnet, dass**
   wenigstens drei Spulen (4a, 4b, 4c) und wenigstens drei Messelektroden (6a, 6b, 6c) vorgesehen sind und wobei jede der Messelektroden (6a, 6b, 6c) in radialer Richtung von der Mitte des Messrohrs (2) aus gesehen zwischen zwei Spulen (4a, 4b, 4c) angeordnet ist.

2. Magnetisch-induktives Durchflussmessgerät (1) nach Anspruch 1, **dadurch gekennzeichnet, dass** die Magnetfeldführungsvorrichtung (5) einen bogenförmig gekrümmten Ring bildet, insbesondere wobei der Ring zumindest bereichsweise kreis- oder ellipsenförmig geformt ist, oder dass die Magnetfeldführungsvorrichtung (5) einen polygonalen Ring bildet, insbesondere wobei der Ring ein sechseckiges oder achteckiges Polygon bildet, vorzugsweise mit abwechselnd langen und kurzen Schenkeln, vorzugsweise wobei auf den langen Schenkeln die Spulen (4) angeordnet sind.

3. Magnetisch-induktives Durchflussmessgerät (1) nach Anspruch 1 oder 2, **dadurch gekennzeichnet, dass** die Steuer- und Auswertevorrichtung (7) zumindest einen Teil der Spulen (4) in wenigstens einem ersten Betriebsmodus (M1) so bestromt, dass das erzeugte Magnetfeld (B) im Bereich des Messrohres (2) in einer ersten Betriebsrichtung ausgerichtet ist und dass die Steuer- und Auswertevorrichtung (7) zumindest einen Teil der Spulen (4) in wenigstens einem zweiten Betriebsmodus (M2) so bestromt, dass das erzeugte Magnetfeld (B) im Bereich des Messrohres (2) in einer von der ersten Betriebsrichtung (M1) verschiedenen zweiten Betriebsrichtung (M2) ausgerichtet ist.

4. Magnetisch-induktives Durchflussmessgerät (1) nach Anspruch 3, **dadurch gekennzeichnet, dass** die Steuer- und Auswertevorrichtung (7) zur Erzeugung des Magnetfeldes (B) zumindest in der ersten Betriebsrichtung und der zweiten Betriebsrichtung jeweils eine Mehrzahl der Spulen (4) bestromt.

5. Magnetisch-induktives Durchflussmessgerät (1) nach Anspruch 3 oder 4, **dadurch gekennzeichnet, dass** die Steuer- und Auswertevorrichtung (7) eine Änderung der Bestromung der Spulen (4) möglichst sprungförmig realisiert oder dass die Steuer- und Auswertevorrichtung (7) eine Änderung der Bestromung der Spulen (4) sinusförmig realisiert, insbesondere wobei kontinuierlich sinusförmige Stromverläufe realisiert werden.

6. Magnetisch-induktives Durchflussmessgerät (1) nach einem der Ansprüche 3 bis 5, **dadurch gekennzeichnet, dass** die Steuer- und Auswertevorrichtung (7) die Spulen so bestromt, dass der insgesamt realisierte Magnetkreis, insbesondere die Magnetfeldeinrichtung (3) und die Magnetfeldführungsvorrichtung (5), in einem linearen Bereich arbeitet, insbesondere wobei der Bereich magnetischer Sättigung vermieden wird.

7. Magnetisch-induktives Durchflussmessgerät (1) nach einem der Ansprüche 3 bis 6, **dadurch gekennzeichnet dass** die Messelektroden (6) in radialer Richtung von der Mitte des Messrohrs (2) aus gesehen so zwischen zwei Spulen (4) angeordnet sind, dass wenigstens ein erstes Paar (6a, 6a') der Messelektroden (6) eine erste Messstrecke mit einer ersten Messstreckenrichtung bilden, wobei die erste Messstreckenrichtung und die erste Betriebsrichtung des Magnetfeldes (B) gegeneinander geneigt sind, vorzugsweise mehr als 45° zueinander geneigt sind, ganz bevorzugt 90° zueinander geneigt sind, dass wenigstens ein zweites Paar (6b, 6b') der Messelektroden (6) eine zweite Messstrecke mit einer zweiten Messstreckenrichtung bilden, wobei die zweite Messstreckenrichtung und die zweite Betriebsrichtung des Magnetfeldes (B) gegeneinander geneigt sind, vorzugsweise mehr als 45° zueinander geneigt sind, ganz bevorzugt 90° zueinander geneigt sind.

8. Magnetisch-induktives Durchflussmessgerät (1) nach Anspruch 7, **dadurch gekennzeichnet, dass** die Steuer- und Auswertevorrichtung 7 zur Ermittlung eines verbesserten Durchflussmesswertes (Vp) in einer Messsequenz (MS) wenigstens einmal den ersten Betriebsmodus (M1) durchführt und im ersten Betriebsmodus (M1) mit dem ersten Paar der Messelektroden (6) eine erste Messspannung (U1) und/oder einen ersten Durchflussmesswert (Vp1) ermittelt, und wenigstens einmal den zweiten Betriebsmodus (M2) durchführt und im zweiten Betriebsmodus (M2) mit dem zweiten Paar der Messelektroden (6) eine zweite Messspannung (U2) und/oder einen zweiten Durchflussmesswert (Vp2) ermittelt und aus der ersten Messspannung (U1) und der zweiten Messspannung (U2) und/oder aus dem ersten Durchflussmesswert (Vp1) und dem zweiten Durchflussmesswert (Vp2) den verbesserten Durchflussmesswert (Vp) ermittelt, insbesondere durch Mittelwertbildung.

9. Magnetisch-induktives Durchflussmessgerät (1) nach Anspruch 8, **dadurch gekennzeichnet, dass** die Steuer- und Auswertevorrichtung (7) in der Messsequenz (MS) den ersten Betriebsmodus (M1) mindestens zweimal durchführt, sodass das Magnetfeld (B) in der einen Orientierung der ersten Betriebsrichtung des Magnetfeldes (B) und in der anderen Orientierung der ersten Betriebsrichtung des Magnetfeldes (B) erzeugt wird, und entsprechende Sub-Messspannungen (Us1.1, Us1.2) / Sub-Durchflussmesswerte (Vps1.1, Vps1.2) bei jeder Orientierung der ersten Betriebsrichtung des Magnetfeldes (B) mit dem ersten Paar der Messelektroden (6) aufgenommen werden und aus den Sub-Messspannungen (Us1.1, Us1.2) / (Sub-Durchflussmesswerten Ups1.1, Ups1.2) der erste Durchflussmesswert Vp1 berechnet wird, und dass die Steuer- und Auswertevorrichtung (7) in der Messsequenz (MS) den zweiten Betriebsmodus (M2) mindestens zweimal durchführt, sodass das Magnetfeld (B) in der einen Orientierung der zweiten Betriebsrichtung des Magnetfeldes (B) und in der anderen Orientierung der zweiten Betriebsrichtung des Magnetfeldes (B) erzeugt wird und entsprechende Sub-Messspannungen (Us2.1, Us2.2) / Sub-Durchflussmesswerte (Vp2.1, Vp2.2) bei jeder Orientierung der zweiten Betriebsrichtung des Magnetfeldes (B) mit dem zweiten Paar der Messelektroden (6) aufgenommen werden und aus den Sub-Messspannungen (Us2.1, Us2.2) / Sub-Durchflussmesswerten (Vp2.1, Vp2.2) der zweite Durchflussmesswert Vp2 berechnet wird.

10. Magnetisch-induktives Durchflussmessgerät (1) nach Anspruch 9, **dadurch gekennzeichnet, dass** die Steuer- und Auswertevorrichtung (7) die Messsequenz (MS) zumindest zeitweise so ausführt, dass zunächst nacheinander das Magnetfeld (B) in den beiden Orientierungen der ersten Betriebsrichtung oder der zweiten Betriebsrichtung und dann nacheinander das Magnetfeld in den beiden Orientierungen der zweiten Betriebsrichtung oder der ersten Betriebsrichtung erzeugt wird, insbesondere wobei die Orientierungen der Betriebsrichtungen auch mehrfach abwechselnd nacheinander angesteuert werden.

11. Magnetisch-induktives Durchflussmessgerät (1) nach Anspruch 9 oder 10, **dadurch gekennzeichnet, dass** die Steuer- und Auswertevorrichtung (7) die Messsequenz (MS) zumindest zeitweise so ausführt, dass die Orientierungen wenigstens zweier Betriebsrichtungen des Magnetfeldes (B) nacheinander so angesteuert werden, dass in axialer Richtung des Messrohres 2 gesehen ein schrittweise rotierendes Magnetfeld (B) resultiert.

12. Magnetisch-induktives Durchflussmessgerät (1) nach einem der Ansprüche 3 bis 11, **dadurch gekennzeichnet, dass** die Steuer- und Auswertevorrichtung (7) zumindest einen Teil der Spulen (4) in wenigstens einem Zwischen-Betriebsmodus (Mint) so bestromt, dass das erzeugte Magnetfeld (B) im Bereich des Messrohres (2) in einer Zwischen-Betriebsrichtung ausgerichtet ist, wobei die Zwischen-Betriebsrichtung von der ersten Betriebsrichtung im ersten Betriebsmodus M1 und der zweiten Betriebsrichtung im zweiten Betriebsmodus M2 und gegebenenfalls weiteren Betriebsrichtungen verschieden ausgerichtet ist, insbesondere wobei zur Erzeugung des Magnetfeldes (B) in der Zwischen-Betriebsrichtung weniger Spulen (4) bestromt werden als zur Erzeugung des Magnetfeldes (B) in den Betriebsrichtungen bestromt werden.

13. Magnetisch-induktives Durchflussmessgerät (1) nach Anspruch 3 bis 12, **dadurch gekennzeichnet, dass** die Steuer- und Auswertevorrichtung (7) zumindest einen Teil der Spulen (4) in wenigstens einem Zwischen-Betriebsmodus (Mint) mit unterschiedlich hohen Strömen bestromt, sodass das erzeugte Magnetfeld (B) im Bereich des Messrohres (2) in einer Zwischen-Betriebsrichtung ausgerichtet ist, wobei die Zwischen-Betriebsrichtung von der ersten Betriebsrichtung im ersten Betriebsmodus (M1) und der zweiten Betriebsrichtung im zweiten Betriebsmodus M2 und gegebenenfalls von weiteren Betriebsrichtungen verschieden ausgerichtet ist, insbesondere wobei zur Erzeugung des Magnetfeldes (B) in der Zwischen-Betriebsrichtung weniger Spulen (4) bestromt werden als zur Erzeugung des Magnetfeldes (B) in den Betriebsrichtungen bestromt werden.

14. Magnetisch-induktives Durchflussmessgerät (1) nach Anspruch 12 oder 13, insoweit rückbezogen auf Anspruch 8, **dadurch gekennzeichnet, dass** die Steuer- und Auswertevorrichtung (7) zur Ermittlung eines verbesserten Durchflussmesswertes (Vp) in einer Messsequenz (MS) neben den Messspannungen (Ui)/Durchflussmesswerten (Vpi) aus dem wenigsten ersten Betriebsmodus (M1) und dem wenigsten zweiten Betriebsmodus (M2) mit einem Paar von Messelektroden (6) im Zwischen-Betriebsmodus (Mint) wenigstens eine Zwischen-Messspannung (Uint)/ einen Zwischen-Durchflussmesswert (Vpint) ermittelt und aus der ersten Messspannung (U1) / dem ersten Durchflussmesswert (Vp1), der zweiten Messspannung (U2) / dem zweiten Durchflussmesswert (Vp2) und der Zwischen-Messspannung (Uint) / dem Zwischen-Durchflussmesswert (Vpint) den verbesserten Durchflussmesswert (Vp) ermittelt, insbesondere durch Mittelwertbildung.

15. Magnetisch-induktives Durchflussmessgerät (1) nach einem der Ansprüche 1 bis 14, **dadurch gekennzeichnet, dass** genau drei Messelektroden (6a, 6b, 6c) vorgesehen sind, dass die drei Messelektroden (6a, 6b, 6c) von der Mitte des Messrohrs (2) aus gesehen unter Winkeln zwischen 90° und 150° zueinander angeordnet sind, insbesondere symmetrisch unter einem Winkel von 120° zueinander angeordnet sind, und dass genau drei Spulen (4a, 4b, 4c) in einem Winkel zwischen 90° und 150° zueinander angeordnet sind, insbesondere symmetrisch in einem Winkel von 120° zueinander angeordnet sind und in einem Winkel von 40° bis 80°, insbesondere in einem Winkel von 60° zu den Messelektroden (6a, 6b, 6c) angeordnet sind, wobei zur Erzeugung des Magnetfeldes (B) in drei Betriebsrichtungen für jede Betriebsrichtung jeweils zwei der Spulen (4) von der Steuer- und Auswertevorrichtung (7) bestromt werden.

16. Magnetisch-induktives Durchflussmessgerät (1) nach einem der Ansprüche 1 bis 14, **dadurch gekennzeichnet, dass** genau drei Messelektroden (6a, 6b, 6c) vorgesehen sind, dass die drei Messelektroden (6a, 6b, 6c) von der Mitte des Messrohrs (2) aus gesehen unter Winkeln zwischen 90° und 150° zueinander angeordnet sind, insbesondere symmetrisch unter einem Winkel von 120° zueinander angeordnet sind, und dass sechs Spulen (4a, 4a', 4b, 4b', 4c, 4c') vorgesehen sind und jeweils zwei (4a, 4a'; 4b, 4b'; 4c, 4c') der sechs Spulen (4a, 4a', 4b, 4b', 4c, 4c') von der Mitte des Messrohrs (2) aus gesehen eine Messelektrode (6a, 6b, 6c) zwischen sich haben und zwei Messelektroden (6a, 6b; 6b, 6c; 6c, 6a) jeweils zwei Spulen (4a', 4b; 4b', 4c, 4c', 4a) zwischen sich haben, und dass bevorzugt jeweils drei (4a, 4b, 4c; 4a', 4b', 4c') der sechs Spulen (4a, 4a', 4b, 4b', 4c, 4c') jeweils unter einem Winkel von 120° zueinander angeordnet sind und jeweils die beiden einer Messelektrode (6a, 6b, 6c) benachbart angeordneten Spulen (4a, 4a'; 4b, 4b'; 4c, 4c') unter dem gleichen Winkel zu der Messelektrode (6a, 6b, 6c) angeordnet sind.

17. Magnetisch-induktives Durchflussmessgerät (1) nach Anspruch 16, **dadurch gekennzeichnet, dass** zur Erzeugung des Magnetfeldes (B) in einer Betriebsrichtung von der Steuer- und Auswertevorrichtung (7) zumindest vier Spulen (4a, 4a', 4b, 4b', 4c, 4c') bestromt werden, vorzugsweise Spulen (4a, 4a', 4b, 4b', 4c, 4c'), die symmetrisch zur Achse der Betriebsrichtung liegen.

18. Magnetisch-induktives Durchflussmessgerät (1) nach einem der Ansprüche 15 bis 17, **dadurch gekennzeichnet, dass** mit den drei Messelektroden (6a, 6b, 6c) drei Messstrecken realisiert sind, dass die Steuer- und Auswertevorrichtung (7) in drei Betriebsmodi drei Magnetfelder mit unterschiedlichen Betriebsrichtungen erzeugt und in der Messsequenz (MS) alle drei Betriebsmodi ausführt und drei Messspannungen (Ui) / Durchflussmesswerte (Vpi) aus den drei Messstrecken gewinnt und aus den drei Messspannungen (Ui) / Durchflussmesswerten (Vpi) einen verbesserten Durchflussmesswert (Vp) gewinnt.

19. Magnetisch-induktives Durchflussmessgerät (1) nach einem der Ansprüche 1 bis 14, **dadurch gekennzeichnet, dass** genau vier Messelektroden (6a, 6b, 6c, 6d) vorgesehen sind, dass die vier Messelektroden (6a, 6b, 6c, 6d) von der Mitte des Messrohrs (2) aus gesehen unter Winkeln zwischen 70° und 110° zueinander angeordnet sind, insbesondere symmetrisch unter einem Winkel von 90° zueinander angeordnet sind und dass genau vier Spulen (4a, 4b, 4c, 4d) in einem Winkel zwischen 70° und 110° zueinander angeordnet sind, insbesondere symmetrisch in einem Winkel von 90° zueinander angeordnet sind, und in einem Winkel von 35° bis 55°, insbesondere in einem Winkel von 45° zu den Messelektroden (6a, 6b, 6c, 6d) angeordnet sind, insbesondere wobei zur Erzeugung des Magnetfeldes (B) in zwei Betriebsrichtungen für jede Betriebsrichtung jeweils alle vier Spulen (4a, 4b, 4c, 4d) von der Steuer- und Auswertevorrichtung (7) bestromt werden.

20. Magnetisch-induktives Durchflussmessgerät (1) nach einem der Ansprüche 1 bis 14, **dadurch gekennzeichnet, dass** genau vier Messelektroden (6a, 6b, 6c, 6d) vorgesehen sind, dass die vier Messelektroden (6a, 6b, 6c, 6d) von der Mitte des Messrohrs (2) aus gesehen unter Winkeln zwischen 70° und 110° zueinander angeordnet sind, insbesondere symmetrisch unter einem Winkel von 90° zueinander angeordnet sind, und dass acht Spulen (4a, 4a', 4b, 4b', 4c, 4c', 4d, 4d') vorgesehen sind, insbesondere wobei jeweils zwei (4a, 4a'; 4b, 4b'; 4c, 4c'; 4d, 4d') der acht Spulen (4a, 4a', 4b, 4b', 4c, 4c', 4d, 4d') von der Mitte des Messrohrs (2) aus gesehen eine Messelektrode (6a; 6b; 6c; 6d) zwischen sich haben und zwei Messelektroden (6a, 6b; 6b, 6c; 6c, 6d; 6d, 6a) jeweils zwei Spulen (4a', 4b; 4b', 4c; 4c', 4d; 4d', 4a) zwischen sich haben, und dass bevorzugt jeweils vier (4a, 4b, 4c, 4d; 4a', 4b', 4c', 4d') der acht Spulen (4a, 4a', 4b, 4b', 4c, 4c', 4d, 4d') jeweils unter einem Winkel von 90° zueinander angeordnet sind und jeweils die beiden einer Messelektrode (6a, 6b, 6c, 6d) benachbart angeordneten Spulen (4a, 4a'; 4b, 4b'; 4c, 4c'; 4d, 4d') unter dem gleichen Winkel zu der Messelektrode (6a, 6b, 6c, 6d) angeordnet sind.

21. Magnetisch-induktives Durchflussmessgerät (1) nach Anspruch 20, **dadurch gekennzeichnet, dass** zur Erzeugung des Magnetfeldes (B) in einer Betriebsrichtung von der Steuer- und Auswertevorrichtung (7) zumindest vier Spulen (4) bestromt werden, vorzugsweise Spulen (4), die symmetrisch zur Achse der Betriebsrichtung liegen.

22. Magnetisch-induktives Durchflussmessgerät (1) nach Anspruch 21, **dadurch gekennzeichnet, dass** zur Erzeugung des Magnetfeldes (B) in einer Betriebsrichtung von der Steuer- und Auswertevorrichtung (7) genau vier Spulen (4) bestromt werden, insbesondere die vier Spulen (4), die symmetrisch zur Achse der Betriebsrichtung liegen und von der Achse der Betriebsrichtung am weitesten beabstandet sind.

23. Magnetisch-induktives Durchflussmessgerät (1) nach einem der Ansprüche 1 bis 22, **dadurch gekennzeichnet, dass** die Steuer- und Auswertevorrichtung (7) den Volumenstrom des Mediums aus einer Linearkombination mehrerer der erfassten Messspannungen (Ui) berechnet, insbesondere wobei die Messspannungen (Ui) durch Wichtungsfaktoren gewichtet werden.

24. Magnetisch-induktives Durchflussmessgerät (1) nach einem der Ansprüche 1 bis 22, **dadurch gekennzeichnet, dass** die Steuer- und Auswertevorrichtung (7) den Volumenstrom (Vp) des Mediums mit einer nichtlinearen Funktion in mehreren der erfassten Messspannungen (Ui) berechnet.

25. Magnetisch-induktives Durchflussmessgerät (1) nach Anspruch 24, **dadurch gekennzeichnet, dass** die nichtlineare Funktion durch ein künstliches neuronales Netzwerk gebildet wird mit einer Eingangsschicht mit wenigstens einer Anzahl an Eingangsneuronen entsprechend der Anzahl der erfassten Messspannungen (Ui) als Eingangsgrößen, mit einer Ausgangsschicht mit wenigstens einem Ausgangsneuron zur Ausgabe zumindest des Volumenstroms (Vp) des Mediums als Ausgangsgröße und mit zumindest einer Zwischenschicht mit wenigstens zwei Neuronen, insbesondere wobei das künstliche neuronale Netzwerk mit Kalibrierdaten trainiert wird.

**Claims**

1. Magnetic-inductive flowmeter (1), having a measuring tube (2) for guiding an electrically conductive medium, having a magnetic field device (3) comprising a plurality of coils (4) for generating a magnetic field (B) which passes through the measuring tube (2) at least partially perpendicularly to the flow direction of the medium, and having a magnetic field guiding device (5) for guiding the magnetic field (B) region by region outside the measuring tube (2) with measuring electrodes (6) for tapping at least one measurement voltage (U) induced in the medium, and with a control and evaluation unit (7) for generating the magnetic field (B) by energizing at least one of the coils (4) and for evaluating the measurement voltage (U) to give a flow measurement value (Vp),

   wherein the magnetic field guiding device (5) extends in circumferential direction closed around the measuring tube (2),
   wherein the coils (4) are arranged distributed over the circumference of the magnetic field guiding device (5) and the magnetic field guiding device (5) acts as a coil core in the region of the coils (4), so that the coils (4) are also arranged with their coil longitudinal axes in the circumferential direction with respect to the measuring tube (2),
   **characterized in
   that** at least three coils (4a, 4b, 4c) and at least three measuring electrodes (6a, 6b, 6c) are provided and wherein each of the measuring electrodes (6a, 6b, 6c) is arranged between two coils (4a, 4b, 4c) in the radial direction as viewed from the center of the measuring tube (2).

2. Magnetic-inductive flowmeter (1) according to claim 1, **characterized in that** the magnetic field guiding device (5) forms an arc-shaped curved ring, in particular wherein the ring is shaped circularly or elliptically at least in regions, or that the magnetic field guiding device (5) forms a polygonal ring, in particular wherein the ring forms a hexagonal or octagonal polygon, preferably with alternating long and short legs, preferably wherein the coils (4) are arranged on the long legs.

3. Magnetic-inductive flowmeter (1) according to claim 1 or 2, **characterized in that** the control and evaluation unit (7) supplies current to at least part of the coils (4) in at least one first operating mode (M1) in such a way that the generated magnetic field (B) in the region of the measuring tube (2) is aligned in a first operating direction, and that the control and evaluation unit (7) supplies current to at least part of the coils (4) in at least one second operating mode (M2) in such a way that the generated magnetic field (5) in the region of the measuring tube (2) is aligned in a second operating direction different from the first operating direction.

4. Magnetic-inductive flowmeter (1) according to claim 3, **characterized in that** the control and evaluation unit (7) for generating the magnetic field (B) supplies current to a plurality of the coils (4) in each of at least the first operating direction and the second operating direction.

5. Magnetic-inductive flowmeter (1) according to claim 3 or 4, **characterized in that** the control and evaluation unit (7) implements a change in the current flowing through the coils (4) as steplike as possible, or **in that** the control and evaluation unit (7) implements a change in the current flowing through the coils (4) sinusoidally, in particular wherein continuously sinusoidal current characteristics are implemented.

6. Magnetic-inductive flowmeter (1) according to one of the claims 3 to 5, **characterized in that** the control and evaluation unit (7) feeds the coils with current in such a way that the magnetic circuit realized as a whole, in particular the magnetic field device (3) and the magnetic field guiding device (5), operates in a linear range, in particular wherein the range of magnetic saturation is avoided.

7. Magnetic-inductive flowmeter (1) according to one of the claims 3 to 6, **characterized in that** the measuring electrodes (6) are arranged between two coils (4) in radial direction as seen from the center of the measuring tube (2) in such a way that at least a first pair (6a, 6a') of the measuring electrodes (6) form a first measuring section with a first measuring section direction, wherein the first measuring section direction and the first operating direction of the magnetic field (B) are inclined with respect to each other, preferably being angled more than 45° to each other, most preferably being angled 90° to each other, that at least a second pair (6b, 6b') of the measuring electrodes (6) form a second measuring section with a second measuring section direction, wherein the second measuring section direction and the second operating direction of the magnetic field (B) are angled more than 45° to each other, most preferably being angled 90° to each other.

8. Magnetic-inductive flowmeter (1) according to claim 7, **characterized in that** the control and evaluation unit (7) for determining an improved flow measurement value (Vp) in a measuring sequence (MS) carries out the first operating mode (M1) at least once and determines a first measurement voltage (U1) and/or first flow measurement value (Vp1) in the first operating mode (M1) with the first pair of measuring electrodes (6), and carries out the second operating mode (M2) at least once and determines a second measurement voltage (U2) and/or second flow measurement value (Vp2) in the second operating mode (M2) with the second pair of measuring electrodes (6) and determines the improved flow measurement value (Vp) from the first flow measurement value (Vp1) and the second flow measurement value (Vp2), in particular by averaging.

9. Magnetic-inductive flowmeter (1) according to claim 8, **characterized in that** the control and evaluation unit (7) in the measuring sequence (MS) performs the first operation mode (M1) at least twice so that the magnetic field (B) is generated in the one orientation of the first operation direction of the magnetic field (B) and in the other orientation of the first operation direction of the magnetic field (B), and respective sub measurement voltages (Us1.1, Us1.2)/sub flow measurement values (Vps1.1, Vps1.2) are captured at each orientation of the first operation direction of the magnetic field (B) with the first pair of measuring electrodes (6) and the first flow measurement value (Vp1) is calculated from the sub measurement voltages (Us1.1, Us1.2)/sub flow measurement values (Vps1.1, Vps1.2) and that the control and evaluation unit (7) performs the second operating mode (M2) at least twice in the measuring sequence (MS) so that the magnetic field (B) is generated in one orientation of the second operating direction of the magnetic field (B) and in the other orientation of the second operating direction of the magnetic field (B), and corresponding sub measurement voltages (Us1.1, Us1.2)/subflow measurement values (Vps1.1, Vps1.2) are captured at each orientation of the second operating direction of the magnetic field (B) with the second pair of the measuring electrodes (6), and the second flow measurement value (Vp2) is calculated from the sub measurement voltages (Us1.1, Us1.2)/subflow measurement values (Vps1.1, Vps1.2).

10. Magnetic-inductive flowmeter (1) according to claim 9, **characterized in that** the control and evaluation unit (7) carries out the measuring sequence (MS), at least intermittently, in such a way that initially the magnetic field (B) is generated successively in the two orientations of the first operating direction or the second operating direction and then successively the magnetic field (B) is generated in the two orientations of the second operating direction or the first operating direction, in particular wherein the orientations of the operating directions are also switched alternately several times successively.

11. Magnetic-inductive flowmeter (1) according to claim 9 or 10, **characterized in that** the control and evaluation unit (7) carries out the measuring sequence (MS), at least intermittently, in such a way that the orientations of at least two operating directions of the magnetic field (B) are switched successively in such a way that, viewed in the axial direction of the measuring tube (2), a step-wise rotating magnetic field (B) results.

12. Magnetic-inductive flowmeter (1) according to any one of claims 3 to 11, **characterized in that** the control and evaluation unit (7) supplies current to at least some of the coils (4) in at least one intermediate operating mode in such a way that the generated magnetic field (B) in the region of the measuring tube (2) is aligned in an intermediate operating direction, wherein the intermediate operating direction is aligned differently from the first operating direction in the first operating mode (M1) and the second operating direction in the second operating mode (M2) and, if appropriate, further operating directions, in particular wherein fewer coils (4) are supplied with current to generate the magnetic field (B) in the intermediate operating direction than are supplied with current to generate the magnetic field (B) in the operating directions.

13. Magnetic-inductive flowmeter (1) according to claims 3 to 12, **characterized in that** the control and evaluation unit (7) supplies current to at least some of the coils (4) in at least one intermediate operating mode with currents of different magnitudes, so that the generated magnetic field (B) in the region of the measuring tube (2) is aligned in an intermediate operating direction, wherein the intermediate operating direction is aligned differently from the first operating direction in the first operating mode (M1) and the second operating direction in the second operating mode (M2) and optionally further operating directions, in particular wherein fewer coils (4) are supplied with current to generate the magnetic field (B) in the intermediate operating direction than are supplied with current to generate the magnetic field (B) in the operating directions.

14. Magnetic-inductive flowmeter (1) according to claim 12 or 13, in so far as referring to claim 8, **characterized in that** the control and evaluation unit (7) for determining an improved flow measurement value (Vp) in a measuring sequence (MS) determines at least one intermediate measurement voltage (Uint)/flow measurement value (Vpint) in addition to the measurement voltages (Ui)/flow measurement values (Vpi) from the least first operating mode (M1) and the least second operating mode (M2) with a pair of measuring electrodes (6) in the intermediate operating mode (Mint) and determines the improved flow measurement value (Vp) from the first measurement voltage (U1)/first flow measurement value (Vp1), the second measurement voltage (U2)/second flow measurement value (Vp2) and the intermediate measurement voltage (Uint)/ intermediate flow measurement value (Vpint), in particular by averaging.

15. Magnetic-inductive flowmeter (1) according to any one of claims 1 to 14, **characterized in that** exactly three measuring electrodes (6a, 6b, 6c) are provided, that the three measuring electrodes (6a, 6b, 6c) are arranged at angles of between 90° and 150° to one another as viewed from the center of the measuring tube (2), in particular are arranged symmetrically at an angle of 120° to one another and that exactly three coils (4a, 4b, 4c) are arranged at angles between 90° and 150° to one another, in particular symmetrically at an angle of 120° to one another, and are arranged at an angle of 40° to 80°, in particular at an angle of 60° to the measuring electrodes, wherein two of the coils (4) are supplied with current by the control and evaluation unit (7) in each case for each operating direction in order to generate the magnetic field (B) in three operating directions.

16. Magnetic-inductive flowmeter (1) according to any one of claims 1 to 14, **characterized in that** exactly three measuring electrodes (6a, 6b, 6c) are provided, that the three measuring electrodes (6a, 6b, 6c) are arranged at angles of between 90° and 150° to one another as viewed from the center of the measuring tube (2), in particular are arranged symmetrically at an angle of 120° to one another, and that six coils (4a, 4a', 4b, 4b', 4c, 4c') are provided, and in each case two (4a, 4a'; 4b, 4b'; 4c, 4c') of the six coils (4a, 4a', 4b, 4b', 4c, 4c') as viewed from the center of the measuring tube (2) have one measuring electrode (6a, 6b, 6c) between them and two measuring electrodes (6a, 6b; 6b, 6c; 6c, 6a) each have two coils between them, and that preferably three (4a, 4b, 4c; 4a', 4b', 4c) of the six coils (4a, 4a', 4b, 4b', 4c, 4c') are each arranged at an angle of 120° to one another and the two coils (4a, 4a'; 4b, 4b'; 4c, 4c') arranged adjacent to a measuring electrode (6a, 6b, 6c) are each arranged at the same angle to the measuring electrode.

**17.** Magnetic-inductive flowmeter (1) according to claim 16, **characterized in that**, in order to generate the magnetic field (B) in an operating direction, at least four coils (4a, 4a', 4b, 4b', 4c, 4c') are supplied with current by the control and evaluation unit (7), preferably coils (4a, 4a', 4b, 4b', 4c, 4c') which lie symmetrically with respect to the axis of the operating direction.

**18.** Magnetic-inductive flowmeter (1) according to any one of claims 15 to 17, **characterized in that** three measuring sections are implemented with the three measuring electrodes (6a, 6b, 6c), that the control and evaluation unit (7) generates three magnetic fields with different operating directions in three operating modes and executes all three operating modes in the measuring sequence (MS) and obtains three measurement voltages (Ui)/flow measurement values (Vpi) from the three measuring sections and and obtains an improved flow measurement value (Vp) from the three measurement voltages (Ui)/flow measurement values (Vpi).

**19.** Magnetic-inductive flowmeter (1) according to any one of claims 1 to 14, **characterized in that** exactly four measuring electrodes (6a, 6b, 6c, 6d) are provided, that the four measuring electrodes (6a, 6b, 6c, 6d) are arranged at angles between 70° and 110° to each other as seen from the center of the measuring tube (2), in particular symmetrically arranged at an angle of 90° to each other, and that exactly four coils (4a, 4b, 4c, 4d) are arranged at an angle between 70° and 110° to each other, in particular symmetrically arranged at an angle of 90° to one another, and are arranged at an angle of 35° to 55°, in particular at an angle of 45° to the measuring electrodes (6a, 6b, 6c, 6d), in particular wherein, in order to generate the magnetic field (B) in two operating directions, in each case, all four coils (4a, 4b, 4c, 4d) are supplied with current by the control and evaluation unit (7) for each operating direction.

**20.** Magnetic-inductive flowmeter (1) according to any one of claims 1 to 14, **characterized in that** exactly four measuring electrodes (6a, 6b, 6c, 6d) are provided, that the four measuring electrodes (6a, 6b, 6c, 6d) are arranged at angles of between 70° and 110° to one another as viewed from the center of the measuring tube (2), in particular are arranged symmetrically at an angle of 90° to one another, and that eight coils (4a, 4a', 4b, 4b', 4c, 4c', 4d, 4d') are provided, in particular wherein in each case two (4a, 4a'; 4b, 4b'; 4c, 4c'; 4d, 4d') of the eight coils (4a, 4a', 4b, 4b', 4c, 4c', 4d, 4d'), viewed from the center of the measuring tube (2), have a measuring electrode (6a; 6b; 6c; 6d) between them and two measuring electrodes (6a, 6b; 6b, 6c; 6c, 6d; 6d, 6a) each have two coils (4a', 4b; 4b', 4c; 4c', 4d; 4d', 4a) between them, and that preferably four (4a, 4b, 4c, 4d; 4a', 4b', 4c', 4d') of the eight coils (4a, 4a', 4b, 4b', 4c, 4c', 4d, 4d') are arranged at an angle of 90° to one another and the two coils (4a, 4a'; 4b, 4b'; 4c, 4c'; 4d, 4d') arranged adjacent to a measuring electrode (6a, 6b, 6c, 6d) are arranged at the same angle to the measuring electrode.

**21.** Magnetic-inductive flowmeter (1) according to claim 20, **characterized in that**, in order to generate the magnetic field (B) in an operating direction, at least four coils (4) are supplied with current by the control and evaluation unit (7), preferably coils (4) that lie symmetrically with respect to the axis of the operating direction.

**22.** Magnetic-inductive flowmeter (1) according to claim 21, **characterized in that**, for generating the magnetic field (B) in an operating direction, exactly four coils (4) are supplied with current by the control and evaluation unit (7), in particular the four coils (4) that lie symmetrically with respect to the axis of the operating direction and are spaced farthest from the axis of the operating direction.

**23.** Magnetic-inductive flowmeter (1) according to any one of claims 1 to 22, **characterized in that** the control and evaluation unit (7) calculates the volumetric flow of the medium from a linear combination of a plurality of the detected measurement voltages, in particular wherein the measurement voltages are weighted by weighting factors.

**24.** Magnetic-inductive flowmeter (1) according to any one of claims 1 to 22, **characterized in that** the control and evaluation unit (7) calculates the volumetric flow (Vp) of the medium with a nonlinear function in several of the captured measurement voltages (Ui).

**25.** Magnetic-inductive flowmeter (1) according to claim 24, **characterized in that** the nonlinear function is formed by an artificial neural network having an input layer with at least a number of input neurons corresponding to the number of detected measurement voltages (Ui) as input variables, having an output layer with at least one output neuron for outputting at least the volumetric flow (Vp) of the medium as output variable, and having at least one intermediate layer with at least two neurons, in particular wherein the artificial neural network is calibrated with calibration data.

**Revendications**

1.  Débitmètre magnéto-inductif (1), comprenant un tube de mesure (2) destiné à guider un fluide électriquement conducteur, comprenant un dispositif à champ magnétique (3) qui possède une pluralité de bobines (4) destinées à générer un champ magnétique (B) qui traverse le tube de mesure (2) au moins partiellement perpendiculairement à la direction d'écoulement du fluide, et un arrangement de guidage de champ magnétique (5) destiné à guider le champ magnétique (B) par zones à l'extérieur du tube de mesure (2), comprenant des électrodes de mesure (6) destinées à prélever au moins une tension de mesure (U) induite dans le fluide, et comprenant un arrangement de commande et d'évaluation (7) destiné à générer le champ magnétique (B) par alimentation électrique d'au moins l'une des bobines (4) et à évaluer la tension de mesure (U) en une valeur de mesure de débit (Vp),

    l'arrangement de guidage de champ magnétique (5) s'étendant de manière fermée dans la direction périphérique autour du tube de mesure (2),
    les bobines (4) étant disposées réparties sur le pourtour de l'arrangement de guidage de champ magnétique (5) et l'arrangement de guidage de champ magnétique (5) agissant comme un noyau de bobine dans la zone des bobines (4), de sorte que les bobines (4) sont également disposées avec leurs axes longitudinaux dans la direction périphérique par rapport au tube de mesure (2),
    **caractérisé en ce que**
    au moins trois bobines (4a, 4b, 4c) et au moins trois électrodes de mesure (6a, 6b, 6c) sont prévues et chacune des électrodes de mesure (6a, 6b, 6c) étant disposée dans la direction radiale, vue depuis le centre du tube de mesure (2), entre deux bobines (4a, 4b, 4c).

2.  Débitmètre magnéto-inductif (1) selon la revendication 1, **caractérisé en ce que** l'arrangement de guidage de champ magnétique (5) forme un anneau courbé en forme d'arc, l'anneau étant notamment façonné au moins dans certaines zones en forme de cercle ou d'ellipse, ou **en ce que** l'arrangement de guidage de champ magnétique(5) forme un anneau polygonal, l'anneau formant notamment un polygone hexagonal ou octogonal, de préférence avec des côtés alternativement longs et courts, les bobines (4) étant disposées de préférence sur les côtés longs.

3.  Débitmètre magnéto-inductif (1) selon la revendication 1 ou 2, **caractérisé en ce que** l'arrangement de commande et d'évaluation (7) alimente électriquement au moins une partie des bobines (4) dans au moins un premier mode de fonctionnement (M1) de telle sorte que le champ magnétique (B) généré soit orienté dans la zone du tube de mesure (2) dans une première direction de fonctionnement et **en ce que** l'arrangement de commande et d'évaluation (7) alimente électriquement au moins une partie des bobines (4) dans au moins un deuxième mode de fonctionnement (M2) de telle sorte que le champ magnétique généré (B) soit orienté dans la zone du tube de mesure (2) dans une deuxième direction de fonctionnement (M2) différente de la première direction de fonctionnement (M1).

4.  Débitmètre magnéto-inductif (1) selon la revendication 3, **caractérisé en ce que** l'arrangement de commande et d'évaluation (7), en vue de générer le champ magnétique (B), alimente électriquement à chaque fois une pluralité des bobines (4) au moins dans la première direction de fonctionnement et dans la deuxième direction de fonctionnement.

5.  Débitmètre magnéto-inductif (1) selon la revendication 3 ou 4, **caractérisé en ce que** l'arrangement de commande et d'évaluation (7) réalise une modification de l'alimentation électrique des bobines (4) de manière aussi brusque que possible ou **en ce que** l'arrangement de commande et d'évaluation (7) réalise une modification de l'alimentation électrique des bobines (4) de manière sinusoïdale, en particulier en réalisant continuellement des courbes de courant sinusoïdales.

6.  Débitmètre magnéto-inductif (1) selon l'une des revendications 3 à 5, **caractérisé en ce que** l'arrangement de commande et d'évaluation (7) alimente électriquement les bobines de telle sorte que le circuit magnétique réalisé globalement, notamment le dispositif à champ magnétique (3) et l'arrangement de guidage de champ magnétique (5), fonctionne dans une plage linéaire, la plage de saturation magnétique étant notamment évitée.

7.  Débitmètre magnéto-inductif (1) selon l'une des revendications 3 à 6, **caractérisé en ce que** les électrodes de mesure (6), vues dans la direction radiale à partir du centre du tube de mesure (2), sont disposées entre deux bobines (4) de telle sorte qu'au moins une première paire (6a, 6a') des électrodes de mesure (6) forme une première section de mesure avec une première direction de section de mesure, la première direction de section de mesure et la première direction de fonctionnement du champ magnétique (B) étant inclinées l'une par rapport à l'autre, de préférence de plus de 45° l'une par rapport à l'autre, de manière tout à fait préférentielle de 90° l'une par rapport à l'autre, qu'au moins une deuxième paire (6b, 6b') des électrodes de mesure (6) forme une deuxième section de mesure avec une deuxième direction de section de mesure, la deuxième direction de section de mesure et la deuxième direction de fonctionnement du champ magnétique (B) étant inclinées l'une par rapport à l'autre, de préférence de plus de 45° l'une par rapport à l'autre, de manière tout à fait préférentielle de 90° l'une par rapport à l'autre.

8. Débitmètre magnéto-inductif (1) selon la revendication 7, **caractérisé en ce que** l'arrangement de commande et d'évaluation (7), en vue de déterminer une valeur de mesure de débit améliorée (Vp), dans une séquence de mesure (MS), exécute au moins une fois le premier mode de fonctionnement (M1) et, dans le premier mode de fonctionnement (M1), détermine avec la première paire d'électrodes de mesure (6) une première tension de mesure (U1) et/ou une première valeur de mesure de débit (Vp1), et exécute au moins une fois le deuxième mode de fonctionnement (M2) et, dans le deuxième mode de fonctionnement (M2), détermine avec la deuxième paire d'électrodes de mesure (6) une deuxième tension de mesure (U2) et/ou une deuxième valeur de mesure de débit (Vp2) et, à partir de la première tension de mesure (U1) et de la deuxième tension de mesure (U2) et/ou à partir de la première valeur de mesure de débit (Vp1) et de la deuxième valeur de mesure de débit (Vp2), détermine la valeur de mesure de débit améliorée (Vp), notamment par calcul de la moyenne.

9. Débitmètre magnéto-inductif (1) selon la revendication 8, **caractérisé en ce que** l'arrangement de commande et d'évaluation (7) exécute au moins deux fois le premier mode de fonctionnement (M1) dans la séquence de mesure (MS), de sorte que le champ magnétique (B) est généré dans une orientation de la première direction de fonctionnement du champ magnétique (B) et dans l'autre orientation de la première direction de fonctionnement du champ magnétique (B), et des sous-tensions de mesure (Us1.1, Us1.2) / sous-valeurs de mesure de débit (Vps1.1, Vps1.2) correspondantes sont enregistrées à chaque orientation de la première direction de fonctionnement du champ magnétique (B) avec la première paire d'électrodes de mesure (6) et la première valeur de mesure de débit (Vp1) est calculée à partir des sous-tensions de mesure (Us1.1, Us1.2) / sous-valeurs de mesure de débit (Ups1.1, Ups1.2), et **en ce que** l'arrangement de commande et d'évaluation (7) exécute le deuxième mode de fonctionnement (M2) au moins deux fois dans la séquence de mesure (MS), de sorte que le champ magnétique (B) est généré dans ladite orientation de la deuxième direction de fonctionnement du champ magnétique (B) et dans l'autre orientation de la deuxième direction de fonctionnement du champ magnétique (B) et des sous-tensions de mesure (Us2.1, Us2.2) / sous-valeurs de mesure de débit (Vp2.1, Vp2.2) correspondantes sont enregistrées à chaque orientation de la deuxième direction de fonctionnement du champ magnétique (B) avec la deuxième paire d'électrodes de mesure (6) et la deuxième valeur de mesure de débit (Vp2) est calculée à partir des sous-tensions de mesure (Us2.1, Us2.2) / sous-valeurs de mesure de débit (Vp2.1, Vp2.2).

10. Débitmètre magnéto-inductif (1) selon la revendication 9, **caractérisé en ce que** l'arrangement de commande et d'évaluation (7) exécute la séquence de mesure (MS) au moins temporairement de telle sorte que le champ magnétique (B) est d'abord généré successivement dans les deux orientations de la première direction de fonctionnement ou de la deuxième direction de fonctionnement, puis successivement dans les deux orientations de la deuxième direction de fonctionnement ou de la première direction de fonctionnement, les orientations des directions de fonctionnement étant notamment commandées plusieurs fois successivement en alternance.

11. Débitmètre magnéto-inductif (1) selon la revendication 9 ou 10, **caractérisé en ce que** l'arrangement de commande et d'évaluation (7) exécute la séquence de mesure (MS) au moins temporairement de telle sorte que les orientations d'au moins deux directions de fonctionnement du champ magnétique (B) sont commandées successivement de manière à ce qu'il en résulte un champ magnétique (B) tournant pas à pas, vu dans la direction axiale du tube de mesure (2).

12. Débitmètre magnéto-inductif (1) selon l'une des revendications 3 à 11, **caractérisé en ce que** l'arrangement de commande et d'évaluation (7) alimente électriquement au moins une partie des bobines (4) dans au moins un mode de fonctionnement intermédiaire (Mint) de telle sorte que le champ magnétique (B) généré dans la zone du tube de mesure (2) est orienté dans une direction de fonctionnement intermédiaire, la direction de fonctionnement intermédiaire étant orientée différemment de la première direction de fonctionnement dans le premier mode de fonctionnement (M1) et de la deuxième direction de fonctionnement dans le deuxième mode de fonctionnement (M2) et, le cas échéant, de directions de fonctionnement supplémentaires, moins de bobines (4) étant notamment alimentées électriquement dans la direction de fonctionnement intermédiaire pour générer le champ magnétique (B) que pour générer le champ magnétique (B) dans les directions de fonctionnement.

13. Débitmètre magnéto-inductif (1) selon la revendication 3 à 12, **caractérisé en ce que** l'arrangement de commande et d'évaluation (7) alimente électriquement au moins une partie des bobines (4) dans au moins un mode de fonctionnement intermédiaire (Mint) avec des courants d'intensités différentes, de telle sorte que le champ magnétique (B) généré dans la zone du tube de mesure (2) est orienté dans une direction de fonctionnement intermédiaire, la direction de fonctionnement intermédiaire étant orientée différemment de la première direction de fonctionnement dans le premier mode de fonctionnement (M1) et de la deuxième direction de fonctionnement dans le deuxième mode de fonctionnement (M2) et, le cas échéant, de directions de fonctionnement supplémentaires, moins de bobines (4) étant notamment alimentées électriquement dans la direction de fonctionnement intermédiaire pour générer le champ magnétique (B) que pour générer le champ magnétique (B) dans les directions de fonctionnement.

14. Débitmètre magnéto-inductif (1) selon la revendication 12 ou 13, sous réserve de se référer à la revendication 8, **caractérisé en ce que** l'arrangement de commande et d'évaluation (7), en vue de déterminer une valeur de débit améliorée (Vp), dans une séquence de mesure (MS), détermine, en plus des tensions de mesure (Ui) / des valeurs de mesure de débit (Vpi) provenant de l'au moins un premier mode de fonctionnement (M1) et de l'au moins un deuxième mode de fonctionnement (M2) avec une paire d'électrodes de mesure (6) dans le mode de fonctionnement intermédiaire (Mint), au moins une tension de mesure intermédiaire (Uint) / une valeur de débit intermédiaire (Vpint) et, à partir de la première tension de mesure (U1) / de la première valeur de mesure de débit (Vp1), de la deuxième tension de mesure (U2) / de la deuxième valeur de mesure de débit (Vp2) et de la tension de mesure intermédiaire (Uint) / de la valeur de mesure de débit intermédiaire (Vpint), détermine la valeur de mesure de débit améliorée (Vp), notamment par calcul de la moyenne.

15. Débitmètre magnéto-inductif (1) selon l'une des revendications 1 à 14, **caractérisé en ce qu'**exactement trois électrodes de mesure (6a, 6b, 6c) sont prévues, **en ce que** les trois électrodes de mesure (6a, 6b, 6c) sont disposées, vues depuis le centre du tube de mesure (2), selon des angles compris entre 90° et 150° les unes par rapport aux autres, en particulier disposées de manière symétrique selon un angle de 120° les unes par rapport aux autres, et **en ce qu'**exactement trois bobines (4a, 4b, 4c) sont disposées selon un angle compris entre 90° et 150° les unes par rapport aux autres, en particulier de manière symétrique selon un angle de 120° les unes par rapport aux autres, et selon un angle de 40° à 80°, en particulier selon un angle de 60° par rapport aux électrodes de mesure (6a, 6b, 6c), deux des bobines (4) étant respectivement alimentées électriquement par l'arrangement de commande et d'évaluation (7) pour chaque direction de fonctionnement afin de générer le champ magnétique (B) dans trois directions de fonctionnement.

16. Débitmètre magnéto-inductif (1) selon l'une des revendications 1 à 14, **caractérisé en ce qu'**exactement trois électrodes de mesure (6a, 6b, 6c) sont prévues, **en ce que** les trois électrodes de mesure (6a, 6b, 6c) sont disposées, vues depuis le centre du tube de mesure (2), selon des angles compris entre 90° et 150° les unes par rapport aux autres, en particulier disposées de manière symétrique selon un angle de 120° les unes par rapport aux autres, et **en ce que** six bobines (4a, 4a', 4b, 4b', 4c, 4c') sont prévues et à chaque fois deux (4a, 4a' ; 4b, 4b' ; 4c, 4c') des six bobines (4a, 4a', 4b, 4b', 4c, 4c'), vues depuis le centre du tube de mesure (2), comportent entre elles une électrode de mesure (6a, 6b, 6c) et deux électrodes de mesure (6a, 6b ; 6b, 6c ; 6c, 6a) comportent respectivement entre elles deux bobines (4a', 4b ; 4b', 4c, 4c', 4a), et **en ce que** de préférence à chaque fois trois (4a, 4b, 4c ; 4a', 4b', 4c') des six bobines (4a, 4a', 4b, 4b', 4c, 4c') sont disposées selon un angle de 120° les unes par rapport aux autres et les deux bobines (4a, 4a' ; 4b, 4b' ; 4c, 4c') disposées adjacentes à une électrode de mesure (6a, 6b, 6c) sont respectivement disposées selon le même angle par rapport à l'électrode de mesure (6a, 6b, 6c).

17. Débitmètre magnéto-inductif (1) selon la revendication 16, **caractérisé en ce que**, en vue de générer le champ magnétique (B) dans une direction de fonctionnement, au moins quatre bobines (4a, 4a', 4b, 4b', 4c, 4c') sont alimentées électriquement par l'arrangement de commande et d'évaluation (7), de préférence des bobines (4a, 4a', 4b, 4b', 4c, 4c') qui sont symétriques par rapport à l'axe de la direction de fonctionnement.

18. Débitmètre magnéto-inductif (1) selon l'une des revendications 15 à 17, **caractérisé en ce que** trois sections de mesure sont réalisées avec les trois électrodes de mesure (6a, 6b, 6c), **en ce que** l'arrangement de commande et d'évaluation (7), dans trois modes de fonctionnement, génère trois champs magnétiques avec des directions de fonctionnement différentes et exécute tous les trois modes de fonctionnement dans la séquence de mesure (MS) et obtient trois tensions de mesure (Ui) / valeurs de mesure de débit (Vpi) à partir des trois sections de mesure et obtient une valeur de mesure de débit améliorée (Vp) à partir des trois tensions de mesure (Ui) / valeurs de mesure de débit (Vpi).

19. Débitmètre magnéto-inductif (1) selon l'une des revendications 1 à 14, **caractérisé en ce qu'**exactement quatre électrodes de mesure (6a, 6b, 6c, 6d) sont prévues, **en ce que** les quatre électrodes de mesure (6a, 6b, 6c, 6d) sont disposées, vues depuis le centre du tube de mesure (2), selon des angles compris entre 70° et 110° les unes par rapport aux autres, en particulier disposées de manière symétrique selon un angle de 90° les unes par rapport aux autres, et **en ce qu'**exactement quatre bobines (4a, 4b, 4c, 4d) sont disposées selon un angle compris entre 70° et 110° les unes par rapport aux autres, en particulier de manière symétrique selon un angle de 90° les unes par rapport aux autres, et selon un angle de 35° à 55°, en particulier selon un angle de 45° par rapport aux électrodes de mesure (6a, 6b, 6c, 6d), les quatre bobines (4a, 4b, 4c, 4d) étant toutes respectivement alimentées électriquement par l'arrangement de commande et d'évaluation (7) pour chaque direction de fonctionnement afin de générer le champ magnétique (B) dans deux directions de fonctionnement.

20. Débitmètre magnéto-inductif (1) selon l'une des revendications 1 à 14, **caractérisé en ce qu'**exactement quatre électrodes de mesure (6a, 6b, 6c, 6d) sont prévues, **en ce que** les quatre électrodes de mesure (6a, 6b, 6c, 6d) sont disposées, vues depuis le centre du tube de mesure (2), selon des angles compris entre 70° et 110° les unes par rapport aux autres, en particulier disposées de manière symétrique selon un angle de 90° les unes par rapport aux autres, et **en ce que** huit bobines (4a, 4a', 4b, 4b', 4c, 4c', 4d, 4d') sont prévues, en particulier à chaque fois deux (4a, 4a' ; 4b, 4b' ; 4c, 4c' ; 4d, 4d') des huit bobines (4a, 4a', 4b, 4b', 4c, 4c', 4d, 4d'), vues depuis le centre du tube de mesure (2), comportent entre elles une électrode de mesure (6a ; 6b ; 6c ; 6d) entre elles et deux électrodes de mesure (6a, 6b ; 6b, 6c ; 6c, 6d ; 6d, 6a) comportent à chaque fois deux bobines (4a', 4b ; 4b', 4c ; 4c', 4d ; 4d', 4a) entre elles, et **en ce que** de préférence à chaque fois quatre (4a, 4b, 4c, 4d ; 4a', 4b', 4c', 4d') des huit bobines (4a, 4a', 4b, 4b', 4c, 4c', 4d, 4d') sont respectivement disposées selon un angle de 90° les unes par rapport aux autres et les deux bobines (4a, 4a' ; 4b, 4b' ; 4c, 4c' ; 4d, 4d') disposées de manière adjacente à une électrode de mesure (6a, 6b, 6c, 6d) sont respectivement disposées selon le même angle par rapport à l'électrode de mesure (6a, 6b, 6c, 6d).

21. Débitmètre magnéto-inductif (1) selon la revendication 20, **caractérisé en ce que**, en vue de générer le champ magnétique (B) dans une direction de fonctionnement, au moins quatre bobines (4) sont alimentées électriquement par l'arrangement de commande et d'évaluation (7), de préférence des bobines (4) qui sont symétriques par rapport à l'axe de la direction de fonctionnement.

22. Débitmètre magnéto-inductif (1) selon la revendication 21, **caractérisé en ce que**, en vue de générer le champ magnétique (B) dans une direction de fonctionnement, exactement quatre bobines (4) sont alimentées électriquement par l'arrangement de commande et d'évaluation (7), notamment les quatre bobines (4) qui sont symétriques par rapport à l'axe de la direction de fonctionnement et qui sont les plus éloignées de l'axe de la direction de fonctionnement.

23. Débitmètre magnéto-inductif (1) selon l'une des revendications 1 à 22, **caractérisé en ce que** l'arrangement de commande et d'évaluation (7) calcule le débit volumique du fluide à partir d'une combinaison linéaire de plusieurs des tensions de mesure ($U_i$) acquises, les tensions de mesure ($U_i$) étant notamment pondérées par des facteurs de pondération.

24. Débitmètre magnéto-inductif (1) selon l'une des revendications 1 à 22, **caractérisé en ce que** l'arrangement de commande et d'évaluation (7) calcule le débit volumique ($V_p$) du fluide à l'aide d'une fonction non linéaire dans plusieurs des tensions de mesure ($U_i$) acquises.

25. Débitmètre magnéto-inductif (1) selon la revendication 24, **caractérisé en ce que** la fonction non linéaire est formée par un réseau neuronal artificiel avec une couche d'entrée comportant au moins un nombre de neurones d'entrée correspondant au nombre de tensions de mesure enregistrées ($U_i$) en tant que grandeurs d'entrée, avec une couche de sortie comportant au moins un neurone de sortie destiné à délivrer au moins le débit volumique ($V_p$) du fluide en tant que grandeur de sortie, et avec au moins une couche intermédiaire comportant au moins deux neurones, le réseau neuronal artificiel étant notamment entraîné avec des données d'étalonnage.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014020477 A1